(19) Europäisches Patentamt
European Patent Office
Office européen des brevets

(11) EP 4 703 149 A1

(12) **EUROPEAN PATENT APPLICATION**

(43) Date of publication:
**04.03.2026 Bulletin 2026/10**

(21) Application number: **25195188.5**

(22) Date of filing: **11.08.2025**

(51) International Patent Classification (IPC):
***B60C 1/00*** *(2006.01)* ***B60C 9/22*** *(2006.01)*
***B60C 9/20*** *(2006.01)* ***B60C 19/00*** *(2006.01)*
***B60C 11/00*** *(2006.01)* ***B60C 11/03*** *(2006.01)*
***C08L 7/00*** *(2006.01)* ***C08K 3/00*** *(2018.01)*
***G06K 19/077*** *(2006.01)* ***C08K 3/36*** *(2006.01)*
***B60C 3/04*** *(2006.01)*

(52) Cooperative Patent Classification (CPC):
(C-Sets available)
**B60C 9/2006; B60C 1/0016; B60C 3/04; B60C 9/2204; C08K 3/04; C08K 3/36; G06K 19/07764;** B60C 19/00; B60C 2009/2048; B60C 2011/0016; B60C 2011/0365; B60C 2200/06
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.08.2024 JP 2024146331**

(71) Applicant: **Sumitomo Rubber Industries, Ltd.**
**Kobe-shi, Hyogo 651-0072 (JP)**

(72) Inventors:
- **HAYASHI, Shunsuke**
**Kobe-shi, 651-0072 (JP)**
- **ITO, Kae**
**Kobe-shi, 651-0072 (JP)**
- **KASAI, Yuki**
**Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **HEAVY DUTY TIRE**

(57) A tire 2 includes a tread 4 formed from a rubber composition containing a rubber component including a butadiene rubber and a filler including carbon black and silica. An RFID tag 64 is positioned between an end FE of a turned-up portion 62 of a carcass ply 58 and a maximum width position PW. An amount CBR of the butadiene rubber is not less than 10 parts by mass. An amount BCB of the carbon black is less than an amount BSi of the silica. The amount CBR, the amount BCB, and a ratio (Wj/Wt) of an axial width Wj of a reference full band BF to an axial width Wt of the tread 4 satisfy the following relational expression.

$$(CBR/BCB)/(Wj/Wt) \geq 0.45$$

FIG. 1

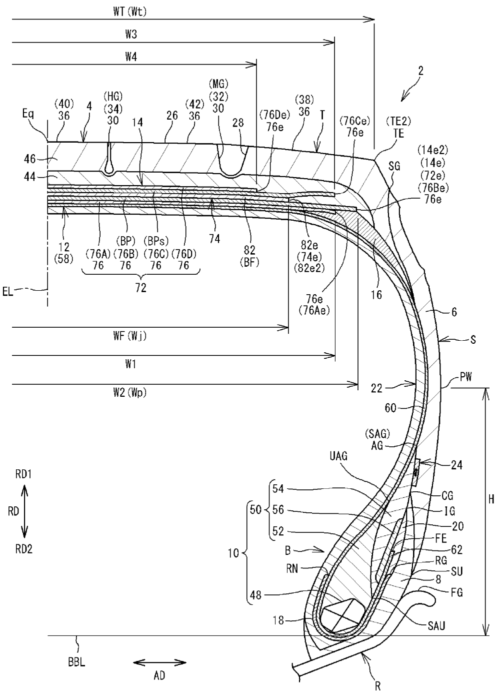


EP 4 703 149 A1

(52) Cooperative Patent Classification (CPC): (Cont.)

C-Sets
**C08L 7/00, C08L 9/00, C08L 91/06, C08L 45/00, C08K 3/04, C08K 3/36, C08K 5/548, C08K 5/18, C08K 5/09, C08K 3/22, C08K 3/06, C08K 5/47**

## Description

[REFERENCE TO RELATED APPLICATION]

The present application claims priority based on Japanese Patent Application No. 2024-146331 filed on August 28, 2024, and entire contents of this Japanese Patent Application are incorporated herein.

## TECHNICAL FIELD

The present invention relates to heavy duty tires.

## BACKGROUND ART

In order to manage data regarding manufacturing management, customer information, running history, etc., of tires, incorporation of radio frequency identification (RFID) tags into tires has been proposed.

Japanese Laid-Open Patent Publication No. 2023-6887 (PATENT LITERATURE 1) discloses a tire provided with an RFID tag between a maximum width position and a core of a bead, and the tire includes a first belt layer including a cord extending in a circumferential direction and a second belt layer including a cord extending slantly from the circumferential direction of the tire in order to secure sufficient durability of the RFID tag.

## SUMMARY OF THE INVENTION

[TECHNICAL PROBLEM]

An object of the present invention is to provide a heavy duty tire that can suppress an impact of an incorporated RFID tag on durability as well as can improve ride comfort.

[SOLUTION TO PROBLEM]

The present invention provides a heavy duty tire including: a pair of beads; a carcass extending between the pair of beads; a tread positioned outside the carcass and configured to come into contact with a road surface; a reinforcing layer positioned radially between the tread and the carcass; and a tag member including an RFID tag. The carcass includes a carcass ply. The carcass ply includes a ply body extending between the pair of beads and a pair of turned-up portions connected to the ply body and turned up at the beads. The tread is formed from a rubber composition containing a rubber component including a butadiene rubber and a filler including carbon black and silica. The reinforcing layer includes a belt including a large number of belt cords arranged parallelly, and a band including a band cord spirally wound. The belt includes at least one belt ply. The band includes at least one full band composed of helically wound band strip. A full band having a largest axial width among the at least one full band is a reference full band. A material of the band cord in the reference full band is steel The RFID tag is positioned radially between an end of one of the turned-up portions and a maximum width position of the tire. An amount CBR of the butadiene rubber in 100 parts by mass of the rubber component is not less than 10 parts by mass. An amount BCB of the carbon black per 100 parts by mass of the rubber component is less than an amount BSi of the silica per 100 parts by mass of the rubber component. The amount CBR of the butadiene rubber, the amount BCB of the carbon black, and a ratio (Wj/Wt) of an axial width Wj of the reference full band to an axial width Wt of the tread satisfy the following relational expression.

$$(CBR/BCB)/(Wj/Wt) \geq 0.45$$

[ADVANTAGEOUS EFFECTS OF THE INVENTION]

The present invention can provide a heavy duty tire that can suppress an impact of an incorporated RFID tag on durability as well as can improve ride comfort.

## BRIEF DESCRIPTION OF DRAWINGS

FIG. 1 is a sectional view showing part of a heavy duty tire according to an embodiment of the present invention,

FIG. 2 is a sectional view showing part of the tire in FIG. 1,
FIG. 3 is a sectional view showing different part of the tire in FIG. 1,
FIG. 4 is a plan view of a tag member,
FIG. 5 is a sectional view taken along line V-V in FIG. 4,
FIG. 6 is an explanatory schematic view of a configuration of a reinforcing layer,
FIG. 7 is a perspective view showing part of a band strip,
FIG. 8 is a plan view of a full band,
FIG. 9 is a side view of the full band,
FIG. 10 is a sectional view of a circumferential narrow groove, and
FIG. 11 is a sectional view of a circumferential narrow groove according to a variation.

**DETAILED DESCRIPTION**

Description is made in detail hereinafter to a preferred embodiment of the present invention with reference to the drawings as appropriate.

A tire of the present invention is fitted on a rim. The inside of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a normal rim, the internal pressure of the tire is adjusted to a normal internal pressure, and no load is applied to the tire is referred to as a normal state.

In the present invention, unless otherwise specified, the dimensions and angles of each component of the tire are measured in the normal state.

The dimensions and angles of each component in a meridian cross-section of the tire, which cannot be measured in a state where the tire is fitted on the normal rim, are measured in a cut plane of the tire obtained by cutting the tire along a plane including a rotation axis. In this measurement, the tire is set such that the distance between right and left beads is equal to the distance between the beads in the tire that is fitted on the normal rim. The configuration of the tire that cannot be confirmed in a state where the tire is fitted on the normal rim is confirmed in the above-described cut plane.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

The present invention refers to a crosslinked rubber as a crosslinked product of a rubber composition obtained by pressurizing and heating the rubber composition. The rubber composition is a material obtained by mixing a rubber component and a chemical such as a filler in a kneader such as a Banbury mixer.

The present invention represents, as cord ends (unit: ends/50 mm), the number of cords included per 50 mm width of a tire element including parallelly arranged cords. Unless otherwise specified, the cord ends are obtained in a cut plane of an element cut along a plane perpendicular to a cord length direction. An element including a helically wound cord also appears to include a plurality of cords arranged parallelly, so that its cord ends can be obtained similarly to the tire element including the parallelly arranged cords.

In the present invention, a complex elastic modulus of a component formed from a crosslinked rubber, from among the components included in the tire, is measured according to the standards of JIS K6394. The measurement conditions are as follows.

Initial strain = 10%
Dynamic strain = ±1%
Frequency = 10 Hz
Mode = stretch mode
Temperature = 70°C

A test piece (40 mm in length × 4 mm in width × 1 mm in thickness) for the measurement is sampled from a tire. The length direction of the test piece is caused to coincide with the circumferential direction of the tire. If no test piece can be sampled from a tire, a test piece is sampled from a crosslinked rubber in a sheet shape (hereinafter, also referred to as rubber sheet) obtained by pressurizing and heating at 170°C for 12 minutes a rubber composition used for formation of a

measurement target element.

In the present disclosure, the complex elastic modulus is represented as a complex elastic modulus at 70°C.

In the present invention, a tread portion of a tire is a part of the tire which comes into contact with a road surface. A bead portion is a part of the tire which is fitted to a rim. A sidewall portion is a part of the tire which extends between the tread portion and the bead portion. A tire includes parts such as a tread portion, a pair of bead portions, and a pair of sidewall portions.

The tread portion includes a tread as a constituent element of the tire. The sidewall portions each include a sidewall as another constituent element of the tire. The bead portions each include a bead as still another constituent element of the tire.

A center portion of the tread portion is also referred to as crown portion. A portion at an end of the tread portion is also referred to as shoulder portion.

[Findings Supporting the Present Invention]

Loads are applied to tires. This causes deformation of the tires. Tires repeat deformation and restoration.

A tire incorporating an RFID tag may have unusual strain. Considered in order to suppress an impact of the RFID tag on durability is disposing the RFID tag at a location less likely to move in the tire. An RFID tag for a heavy duty tire tends to be disposed in a zone from a turned-up end of a carcass ply to a maximum width position of the tire in consideration of an impact of the RFID tag on durability.

In a case where a tire is deformed to have a flattened contour, large strain is caused when the tire starts pushing a road surface and when the tire sends off the road surface. However, by adopting a band including a cord extending in the circumferential direction like the first belt layer of the tire disclosed in PATENT LITERATURE 1, the tire can be deformed while being kept in a ring shape. In this case, the tire is suppressed from being deformed in the circumferential direction, and can thus be reduced in strain caused upon starting pushing a road surface and upon sending off the road surface.

A tire including a band may achieve further suppression of an impact of an RFID tag on durability. However, the tire has suppressed deformation and thus has new problem of poor ride comfort.

In view of the above, the inventors of the present invention have diligently investigated a technique that can suppress an impact of an incorporated RFID tag on durability by adopting a band as well as can improve ride comfort of a tire, and have completed the present invention to be described hereinafter.

[Summary of Embodiment of the Present Invention]

The present invention provides a heavy duty tire including: a pair of beads; a carcass extending between the pair of beads; a tread positioned outside the carcass and configured to come into contact with a road surface; a reinforcing layer positioned radially between the tread and the carcass; and a tag member including an RFID tag, in which the carcass includes a carcass ply, the carcass ply includes a ply body extending between the pair of beads, and a pair of turned-up portions connected to the ply body and turned up at the beads, the tread is formed from a rubber composition containing a rubber component including a butadiene rubber, and a filler including carbon black and silica, the reinforcing layer includes a belt having a large number of belt cords arranged parallelly, and a band having a band cord spirally wound, the belt includes at least one belt ply, the band includes at least one full band composed of helically wound band strip, a full band having a largest axial width among the at least one full band is a reference full band, a material of the band cord in the reference full band is steel, the RFID tag is positioned radially between an end of one of the turned-up portions and a maximum width position of the tire, an amount CBR of the butadiene rubber in 100 parts by mass of the rubber component is not less than 10 parts by mass, an amount BCB of the carbon black per 100 parts by mass of the rubber component is less than an amount BSi of the silica per 100 parts by mass of the rubber component, and the amount CBR of the butadiene rubber, the amount BCB of the carbon black, and a ratio (Wj/Wt) of an axial width Wj of the reference full band to an axial width Wt of the tread satisfy a following relational expression.

$$(CBR/BCB)/(Wj/Wt) \geq 0.45$$

The heavy duty tire according to the present invention can suppress an impact of an incorporated RFID tag on durability as well as can improve ride comfort. A mechanism exhibiting such effects of the tire is not clarified but is inferred as follows.

The RFID tag in the tire is positioned radially between the end of the turned-up portion and the maximum width position of the tire. The RFID tag is disposed at a location less likely to move in the tire. Such disposition suppresses an impact of the RFID tag on durability.

The reinforcing layer includes the belt including the large number of belt cords arranged parallelly, and the band

including the band cord helically wound. The tire can be deformed while being kept in a ring shape. This effectively suppresses circumferential deformation. The tire can be reduced in strain caused upon starting pushing a road surface and upon sending off the road surface. The reduction in strain suppresses an impact of the RFID tag on durability.

The tire including the reinforcing layer having the belt and the band can suppress an impact of an incorporated RFID tag on durability. Meanwhile, deformation of the tire is suppressed to possibly affect ride comfort.

However, the rubber composition forming the tread of the tire contains the butadiene rubber as a rubber component. The butadiene rubber has excellent low-temperature characteristics. The butadiene rubber decreases a glass-transition point of the rubber composition forming the tread. The butadiene rubber can provide the tread with flexibility from a low-temperature range. In the rubber composition forming the tread, the amount CBR of the butadiene rubber in 100 parts by mass of the rubber component is not less than 10 parts by mass, and the amount BCB of the carbon black per 100 parts by mass of the rubber component is less than the amount BSi of the silica per 100 parts by mass of the rubber component. The tread formed from the rubber composition is flexible enough to contribute to improvement in the ride comfort of the tire.

The amount CBR of the butadiene rubber, the amount BCB of the carbon black, and the ratio (Wj/Wt) of the axial width Wj of the reference full band to the axial width Wt of the tread are set to satisfy the above relational expression. Accordingly, the tire can suppress an impact of the RFID tag on durability as well as can improve ride comfort with excellent balance.

The tire can suppress an impact of an incorporated RFID tag on durability as well as can improve ride comfort.

The larger the axial width Wj of the reference full band is, the larger holding force of the band is. Deformation of the tire is suppressed to suppress an impact of the RFID tag on durability. However, the tire may fail to maintain excellent ride comfort. If the axial width Wj of the reference full band is large, weight of the tire increases. This may increase rolling resistance of the tire. In contrast, if the axial width Wj of the reference full band is small, the holding force of the band decreases to improve ride comfort. However, the tire may fail to suppress an impact of the RFID tag on durability. In view of this, the ratio (Wj/Wt) is considered as follows.

The ratio (Wj/Wt) of the axial width Wj of the reference full band to the axial width Wt of the tread is preferably not less than 0.60 and not greater than 0.90. Accordingly, the tire can suppress an impact of the RFID tag on durability as well as can improve ride comfort. Furthermore, this suppresses an impact of the reference full band on the weight of the tire, and the tire can thus maintain low rolling resistance.

The tread of the tire includes a plurality of circumferential grooves aligned axially. A region including a circumferential groove positioned axially outermost (also referred to as shoulder circumferential groove) in the plurality of circumferential grooves is likely to move and wear. Adopting a soft tread for improvement in ride comfort may cause deterioration in the wear resistance of the tire. In view of this, a position of an end of the reference full band relative to the circumferential groove positioned axially outermost is considered as follows.

Preferably, the tread includes a plurality of circumferential grooves, the plurality of circumferential grooves includes two circumferential main grooves positioned axially outermost, the two circumferential main grooves each include a pair of wall surfaces configured not to come into contact with each other even when the tread comes into contact with a road surface to be deformed, and the reference full band includes ends positioned axially outside the circumferential main grooves. This suppresses movement of portions provided with the circumferential main grooves although the circumferential grooves positioned axially outermost are the circumferential main grooves. The tire can maintain excellent wear resistance as well as can improve ride comfort.

The band of the tire includes the reference full band obtained by helically winding the band strip. Displaced circumferential positions where the band strip starts wound and ends wound provide the reference full band with a wide portion and a narrow portion. In this case, the reference full band includes a portion with large holding force and a portion with small holding force. The portion with large holding force is smaller in outer radial growth than the portion with small holding force, and the tire may thus vibrate during high-speed running. In a state where the tire is viewed axially from a side surface thereof, the band strip forming the reference full band includes a first portion including a first end and a second portion including a second end overlapped with each other. In view of this, a size of a zone where the first portion and the second portion are overlapped with each other is considered as follows.

Preferably, in a state where the tire is viewed axially from a side surface thereof, the band strip forming the reference full band includes the first portion including the first end and the second portion including the second end overlapped with each other, and a central angle of the zone where the first portion and the second portion are overlapped with each other is not greater than 150 degrees. This effectively suppresses vibration during high-speed running. The tire can improve ride comfort.

A portion provided with an RFID tag is heavier than a portion provided with no RFID tag. Provision of the RFID tag influences uniformity of the tire. Weight of the reference full band is varied at an end of the band strip. The end of the band strip also influences uniformity of the tire. If the RFID tag and the end of the band strip match each other in circumferential position, uniformity may be lowered. Furthermore, the end of the band strip is more likely to be detached than any other portion. Accordingly, when the RFID tag and the end of the band strip match each other in circumferential position, the end

of the band strip may have concentration of strain and belt edge loose (hereinafter, also referred to as BEL) may be generated from the end of the band strip. In view of this, the RFID tag and the end of the band strip are considered in circumferential position as follows.

Preferably, the RFID tag does not match the first end and the second end of the band strip in circumferential position. This effectively suppresses vibration during high-speed running. The tire can improve ride comfort. Concentration of strain is suppressed at the end of the band strip, so that the tire can also suppress BEL generated from the end of the band strip.

Preferably, each of the pair of beads includes a core and an apex, the apex includes an inner apex positioned radially outside the core and an outer apex positioned radially outside the inner apex, and the RFID tag is positioned radially between an outer end of the outer apex and the end of one of the turned-up portion. The RFID tag is thus disposed to be axially overlapped with the outer apex. The outer apex suppresses deformation of the RFID tag due to an applied load. The RFID tag is disposed distant from the end of the turned-up portion which is likely to have concentration of strain, to also suppress concentration of strain to the RFID tag. The tire can suppress an impact of the RFID tag on durability.

The tread of the tire is soft as described above. A soft tread is likely to have rubber abrasion, and adoption of such a tread may thus lead to deterioration in wear resistance. If the tread is hardened for wear resistance, adoption of the soft tread becomes insignificant.

A tread of a tire typically includes a groove carved therein to take running on a wet road surface into consideration. The groove influences stiffness of the tread. In view of this, the tread is considered as follows in configuration.

Preferably, the plurality of circumferential grooves further includes at least one circumferential narrow groove positioned between the two circumferential main grooves, the circumferential narrow groove includes a body portion having a groove opening of the circumferential narrow groove, and an enlarged width portion having a groove bottom of the circumferential narrow groove, the body portion includes a narrow groove portion, the enlarged width portion has a maximum groove width larger than a minimum groove width of the narrow groove portion, and the circumferential narrow groove includes a pair of wall surfaces configured to come into contact with each other in the narrow groove portion when the tread comes into contact with a road surface to be deformed. This effectively suppresses deformation of the tread. Although the soft tread is adopted, the tire can be increased in apparent stiffness of the tread. This suppresses abrasion, and the tire can thus be improved in wear resistance.

A tread comes into contact with a road surface to be worn even if the tread has excellent wear resistance. Such wear decreases groove volume, which may lower running performance (hereinafter, wet performance) on a wet road surface. However, the enlarged width portion having a large width is provided radially inside the narrow groove portion of the circumferential narrow groove. The enlarged width portion is exposed after the narrow groove portion disappears. The enlarged width portion, which is exposed at or after a middle stage of wear causing disappearance of the narrow groove portion, can contribute to suppression of deterioration in wet performance. The tire can maintain excellent wear resistance while improving ride comfort, and can also suppress deterioration in wet performance due to wear.

Preferably, the filler includes silica having an average primary particle diameter not greater than 16 nm. This is because such silica can contribute to improvement of wear resistance and durability.

Preferably, the filler includes carbon black having an average primary particle diameter not greater than 19 nm. This is because such carbon black can contribute to improvement of wear resistance and durability.

Preferably, the rubber composition further contains a silane coupling agent, and the silane coupling agent includes a mercapto-based silane coupling agent. This is because such a silane coupling agent can contribute to improvement of wear resistance and durability.

Preferably, the rubber composition further contains a resin component. This is because the resin component can contribute to improvement of ride comfort.

Preferably, the band strip is a cord array including a plurality of the band cords arrayed, and the band cords included in the band strip are not greater than five in number. This suppresses circumferential variation in axial width of the reference full band to suppress circumferential variation in holding force and weight. Vibration during high-speed running is effectively suppressed so as to improve ride comfort of the tire. Concentration of strain is suppressed at the end of the band strip, so that the tire can also suppress BEL generated from the end of the band strip.

As described above, the present invention provides a heavy duty tire that can suppress an impact of an incorporated RFID tag on durability as well as can improve ride comfort. This will be described in detail hereinafter.

[Details of Embodiment of the Present Invention]

[Rubber Composition]

A tread is formed from a rubber composition. The tread is a crosslinked product of the rubber composition, that is, a crosslinked rubber. The following will describe the rubber composition for the tread. The rubber composition contains a rubber component and a filler.

[Rubber Component]

The rubber component includes a butadiene rubber (hereinafter, referred to as BR). The rubber component includes a BR, and may further include a rubber component other than the BR, or may be composed of only the BR.

[Butadiene Rubber]

The butadiene rubber (BR) is not particularly limited, and, for example, BRs that are generally used in the tire industry, such as a BR having a cis content of less than 50% by mass (low-cis BR), a BR having a cis content of not less than 90% by mass (high-cis BR), a rare-earth element-based butadiene rubber synthesized using a rare-earth element-based catalyst (rare-earth element-based BR), a BR containing syndiotactic polybutadiene crystals (SPB-containing BR), and modified BRs (high-cis modified BR, low-cis modified BR), can be used. These BRs may be used individually, or two or more of these BRs may be used in combination. The cis content of the BR is a value calculated by infrared absorption spectrometry.

The BR has excellent low-temperature characteristics. The BR decreases a glass-transition point of the rubber composition forming the tread. The BR is assumed to provide the tread with flexibility from a low-temperature range and contribute to improvement in the ride comfort of the tire.

As described above, the amount CBR of the BR in 100 parts by mass of the rubber component is not less than 10 parts by mass. The BR can effectively contribute to improvement in ride comfort. From this viewpoint, the amount CBR of the BR in 100 parts by mass of the rubber component is preferably not less than 15 parts by mass and more preferably not less than 25 parts by mass. From the viewpoint of maintaining excellent durability, the amount CBR of the BR is preferably not greater than 40 parts by mass and more preferably not greater than 35 parts by mass.

As described above, the rubber component can contain a rubber component other than the BR. Examples of the rubber component other than the BR include a crosslinkable rubber component typically used in the tire industry. Examples of such a rubber component include isoprene-based rubber, styrene butadiene rubber (SBR), styrene-isoprene-butadiene copolymer rubber (SIBR), styrene-isobutylene-styrene block copolymer (SIBS), chloroprene rubber (CR), acrylonitrile-butadiene rubber (NBR), hydrogenated nitrile rubber (HNBR), butyl rubber (IIR), ethylene-propylene rubber, polynorbornene rubber, silicone rubber, polyethylene chloride rubber, fluororubber (FKM), acrylic rubber (ACM), and hydrin rubber. One of these other rubber components may be selected and used alone, or two or more of these other rubber components may be selected and used in combination.

The rubber component of the rubber composition for the tread preferably includes an isoprene-based rubber and an SBR as rubber components other than the BR.

[Isoprene-Based Rubber]

Examples of the isoprene-based rubber include natural rubber (NR), polyisoprene rubber (IR), reformed NR, modified NR, and modified IR. As the NR, for example, NRs that are generally used in the tire industry, such as SIR20, RSS#3, and TSR20, can be used. The IR is not particularly limited, and, as the IR, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination. Among them, NR is preferable.

In a case where the rubber component includes an NR, from the viewpoint of increasing strength of the tread and improving wear resistance, an amount CNR of the NR in 100 parts by mass of the rubber component is preferably not less than 40 parts by mass, more preferably not less than 50 parts by mass, and further preferably not less than 60 parts by mass. The amount CNR is preferably not greater than 85 parts by mass, more preferably not greater than 80 parts by mass, and further preferably not greater than 75 parts by mass.

[SBR]

The SBR is not particularly limited, and examples of the SBR include solution-polymerized SBRs (S-SBRs), emulsion-polymerized SBRs (E-SBRs), and modified SBRs thereof (modified S-SBRs and modified E-SBRs). Examples of modified SBRs include modified SBRs in which the terminals and/or the main chain thereof is modified, and modified SBRs coupled by using tin, a silicon compound, or the like (a condensate, one having a branch structure, etc.). Among them, S-SBRs and modified SBRs are preferable as SBRs included in the rubber component. Furthermore, hydrogenated products of these SBRs (hydrogenated SBRs), etc., can also be used as SBRs in this rubber composition. One of these SBRs may be selected and used alone, or two or more of these SBRs may be selected and used in combination.

The SBR has excellent viscoelastic properties in a region highly correlated with wet performance (specifically, grip performance on a wet road surface), and has excellent compatibility and reactivity with silica described later. The SBR is considered to be able to contribute to improvement of wet performance and wear resistance.

From the viewpoint of being able to contribute to improvement of wet performance and wear resistance, the styrene content of the SBR is preferably not less than 5% by mass, more preferably not less than 7% by mass, and further preferably not less than 9% by mass. The styrene content of the SBR is preferably not greater than 24% by mass, more preferably not greater than 18% by mass, and further preferably not greater than 16% by mass. The styrene content of the SBR is calculated by $^1$H-NMR measurement.

The vinyl content of the SBR is not less than 26% by mole. This is because, if the vinyl content is less than 26% by mole, it is difficult to improve wet performance and wear resistance to the degree required for tire performance. The vinyl content is preferably not less than 27% by mole, more preferably not less than 28% by mole, further preferably not less than 29% by mole, and particularly preferably not less than 30% by mole. The vinyl content of the SBR is preferably not greater than 45% by mole, more preferably not greater than 44% by mole, further preferably not greater than 43% by mole, and particularly preferably not greater than 42% by mole. The vinyl content (1,2-bond butadiene unit content) of the SBR is measured by infrared absorption spectrometry.

From the viewpoint of improving wet performance, the glass transition temperature (Tg) of the SBR is preferably not lower than -80°C, more preferably not lower than -70°C, and further preferably not lower than -65°C. From the viewpoint of reducing rolling resistance, the Tg of the SBR is preferably not higher than -40°C, more preferably not higher than -45°C, further preferably not higher than -50°C, and particularly preferably not higher than -55°C. The Tg of the SBR is obtained by performing differential scanning calorimetry (DSC) in accordance with JIS K7121 for "pure SBR content" obtained by removing elongation oil using acetone in accordance with JIS K6229.

From the viewpoint of improving wear resistance, the weight-average molecular weight (Mw) of the SBR is preferably not less than 100 thousand, more preferably not less than 150 thousand, and further preferably not less than 190 thousand. From the viewpoint of crosslinking uniformity, etc., the Mw of the SBR is preferably not greater than 2.5 million, more preferably not greater than 2 million, and further preferably not greater than 1 million. The Mw of the SBR can be obtained by conversion, based on a polystyrene standard, of a value measured by gel permeation chromatography (GPC) (e.g., GPC-8000 series manufactured by Tosoh Corporation, detector: differential refractometer, column: TSKGEL SUPERMULTIPORE HZ-M manufactured by Tosoh Corporation).

In a case where the rubber component includes an SBR, from the viewpoint of maintaining excellent ride comfort, an amount CSBR of the SBR in 100 parts by mass of the rubber component is preferably not greater than 20 parts by mass, more preferably not greater than 15 parts by mass, and further preferably not greater than 10 parts by mass. The amount CSBR of the SBR in 100 parts by mass of the rubber component may alternatively be 0 parts by mass.

In a case where the rubber component further includes an NR and an SBR in addition to the BR, the amount CNR of the NR is preferably larger than the sum of the amount CSBR of the SBR and the amount CBR of the BR. This is because dispersibility of silica in the rubber composition is enhanced while durability of the tread is maintained. From the viewpoint of improving ride comfort, the amount CBR of the BR is more preferably larger than the amount CSBR of the SBR.

[Filler]

As described above, the rubber composition for the tread contains a filler, and the filler includes carbon black and silica. In other words, the rubber composition contains carbon black and silica as a filler. The filler may alternatively include only carbon black and silica. In other words, the rubber composition may contain the filler composed of only carbon black and silica.

[Carbon Black]

The carbon black is not particularly limited, and, for example, carbon blacks that can be generally used in the tire industry, such as GPF, FEF, HAF, ISAF, and SAF, can be used. In addition, from the viewpoint of reducing environmental load and from the viewpoint of being able to reduce friction between the carbon black surface and a rubber molecular chain to suppress heat generation, recycled carbon black (rCB) obtained from the pyrolysis of used tires can also be used for the tire. These carbon blacks may be used individually, or two or more of these carbon blacks may be used in combination

In the present invention, to distinguish from recycled carbon black (rCB), the above-described carbon blacks that can be generally used in the tire industry, such as GPF, FEF, HAF, ISAF, and SAF, are also referred to as standard carbon black (sCB).

Recycled carbon black can be obtained from the pyrolysis process of used pneumatic tires, as described above. For example, European Patent Application Publication No. 3427975 refers to "Rubber Chemistry and Technology", Vol. 85, No. 3, pages 408-449 (2012), especially pages 438, 440, and 442, and states that recycled carbon black can be obtained by pyrolysis of organic materials at 550 to 800°C with exclusion of oxygen, or by vacuum pyrolysis at relatively low

temperatures ([0027]). Carbon blacks obtained from such pyrolysis processes usually lack functional groups on the surfaces thereof, as mentioned in[0004] of Japanese Patent No. 6856781 (A Comparison of Surface Morphology And Chemistry of Pyrolytic Carbon Blacks with Commercial Carbon Blacks, Powder Technology 160 (2005) 190-193).

The recycled carbon black may lack functional groups on the surface thereof or may be treated so as to include functional groups on the surface thereof. The treatment to be performed so as to include functional groups on the surface of the recycled carbon black can be carried out by ordinary methods. For example, in European Patent Application Publication No. 3173251, carbon black obtained from a pyrolysis process is treated with potassium permanganate under acidic conditions to obtain carbon black containing hydroxyl and/or carboxyl groups on the surface thereof. Also, in Japanese Patent No. 6856781, carbon black obtained from a pyrolysis process is treated with an amino acid compound containing at least one thiol or disulfide group to obtain carbon black whose surface has been activated. The recycled carbon black according to the present embodiment also includes carbon black that has been treated so as to include functional groups on the surface thereof.

As the recycled carbon black, recycled carbon blacks commercially available from Strebl Green Carbon Pte Ltd, LD Carbon, etc., can be used.

From the viewpoint of improving wear resistance and durability, the average primary particle diameter of the carbon black is preferably not greater than 25 nm, more preferably not greater than 22 nm, and further preferably not greater than 19 nm. The average primary particle diameter is preferably not less than 6 nm, more preferably not less than 9 nm, and further preferably not less than 12 nm.

The average primary particle diameter of the carbon black can be obtained by observing the carbon black with a transmission or scanning electron microscope, measuring the outer diameters of 400 or more primary particles of the carbon black observed in the field of view, and averaging these outer diameters.

From the viewpoint of improving wear resistance and durability, the nitrogen adsorption specific surface area ($N_2SA$) of the carbon black is preferably not less than 10 $m^2/g$, more preferably not less than 20 $m^2/g$, and further preferably not less than 30 $m^2/g$. This nitrogen adsorption specific surface area ($N_2SA$) is preferably not greater than 250 $m^2/g$, more preferably not greater than 200 $m^2/g$, and further preferably not greater than 150 $m^2/g$. The nitrogen adsorption specific surface area ($N_2SA$) of the carbon black is measured according to JIS K6217-2: 2017.

From the viewpoint of exhibiting reinforcing action and the viewpoint of preventing deterioration due to UV light, the amount BCB of the carbon black per 100 parts by mass of the rubber component is preferably not less than 3 parts by mass, more preferably not less than 5 parts by mass, and further preferably not less than 10 parts by mass. From the viewpoint that the tread can obtain flexibility to alleviate stress, the amount BCB is preferably not greater than 25 parts by mass, more preferably not greater than 20 parts by mass, and further preferably not greater than 15 parts by mass.

The amount of the recycled carbon black in 100 parts by mass of the carbon black is not particularly limited, and can be, for example, greater than 1 part by mass, greater than 5 parts by mass, greater than 10 parts by mass, greater than 20 parts by mass, greater than 25 parts by mass, or greater than 30 parts by mass. From the viewpoint of exhibiting the reinforcing action of the carbon black, the amount of the recycled carbon black is preferably less than 95 parts by mass, more preferably less than 90 parts by mass, and further preferably less than 85 parts by mass.

[Silica]

The silica is not particularly limited, and silicas that are generally used in the tire industry, such as silica prepared by a dry process (anhydrous silica) and silica prepared by a wet process (hydrous silica), can be used. From the viewpoint of environmental load, silica made from a biomass material (e.g., amorphous silica purified from rice husks) may also be used. Among them, hydrous silica prepared by a wet process is preferable for the reason that it has a higher silanol group content. These silicas may be used individually, or two or more of these silicas may be used in combination.

Silica made from a biomass material can be obtained, for example, by: extracting silicate from rice husk ashes obtained by burning rice husks, with a sodium hydroxide solution; using the silicate to react with sulfuric acid in the same way as conventional wet silica; and then filtering, washing with water, drying, and pulverizing the precipitated silicon dioxide produced.

It should be noted that when silica crystallizes, the silica is insoluble in water, and silicic acid, which is a component of the silica, cannot be utilized. The crystallization of silica in the rice husk ash can be suppressed by controlling the combustion temperature and the combustion time (see Japanese Laid-Open Patent Publication No. 2009-2594, Akita Prefectural University Web Journal B/2019, vol. 6, p. 216-222, etc.).

The amorphous silica extracted from rice husks may be ones commercially available from Wilmar International Limited, etc.

From the viewpoint of improving wear resistance and durability, the average primary particle diameter of the silica is preferably not greater than 22 nm, more preferably not greater than 19 nm, and further preferably not greater than 16 nm. The average primary particle diameter is preferably not less than 6 nm, more preferably not less than 9 nm, and further preferably not less than 12 nm.

The average primary particle diameter of the silica can be obtained by observing the silica with a transmission or scanning electron microscope, measuring the outer diameters of 400 or more primary particles of the silica observed in the field of view, and averaging these outer diameters.

From the viewpoint of improving wear resistance and durability, the nitrogen adsorption specific surface area ($N_2SA$) of the silica is preferably not less than 100 $m^2/g$, more preferably not less than 110 $m^2/g$, and further preferably not less than 120 $m^2/g$. This nitrogen adsorption specific surface area is preferably not greater than 500 $m^2/g$, more preferably not greater than 350 $m^2/g$, and further preferably not greater than 250 $m^2/g$.

The nitrogen adsorption specific surface area ($N_2SA$) of the silica is measured by the BET method according to ASTM D3037-93.

The amount BSi of the silica per 100 parts by mass of the rubber component is preferably not less than 15 parts by mass. The silica can effectively reinforce the tread. Since the stiffness of the tread is increased, wear resistance and durability are improved. From this viewpoint, the amount BSi of the silica is more preferably not less than 17 parts by mass, further preferably not less than 19 parts by mass, and particularly preferably not less than 20 parts by mass. From the viewpoint of being able to obtain flexibility to alleviate stress, the amount BSi of the silica is preferably not greater than 70 parts by mass, more preferably not greater than 55 parts by mass, and further preferably not greater than 40 parts by mass.

The amount BCB of the carbon black per 100 parts by mass of the rubber component is less than the amount BSi of the silica per 100 parts by mass of the rubber component. This increases flexibility of the tread. **In** this case, the tire is inferred to improve ride comfort. From this viewpoint, a ratio BCB/BSi of the amount BCB of the carbon black to the amount BSi of the silica is preferably not greater than 5/6, more preferably not greater than 2/3, and further preferably not greater than 1/2. From the viewpoint of maintaining durability of the tread, the ratio BCB/BSi is preferably not less than 1/10, more preferably not less than 1/7, and further preferably not less than 1/5.

[Other Fillers]

As fillers other than the silica and the carbon black, fillers that are generally used in the tire industry, such as aluminum hydroxide, calcium carbonate, alumina, clay, and talc, can be blended.

From the viewpoint of increasing flexibility of the tread to improve ride comfort of the tire, an amount CCB of the carbon black in 100 parts by mass of the filler is preferably not greater than 45 parts by mass, more preferably not greater than 40 parts by mass, and further preferably not greater than 35 parts by mass. From the viewpoint of maintaining durability of the tread, the amount CCB of the carbon black is preferably not less than 10 parts by mass, more preferably not less than 15 parts by mass, and further preferably not less than 20 parts by mass.

From the viewpoint of improving wear resistance and durability, the total amount of the fillers per 100 parts by mass of the rubber component is preferably not less than 30 parts by mass, more preferably not less than 35 parts by mass, and further preferably not less than 40 parts by mass. From the viewpoint that the tread can obtain flexibility to alleviate stress, the total amount of the fillers is preferably not greater than 60 parts by mass, more preferably not greater than 50 parts by mass, and further preferably not greater than 45 parts by mass.

[Silane Coupling Agent]

As described above, the rubber composition contains silica as a filler. The silica is preferably used in combination with a silane coupling agent. The silane coupling agent is not particularly limited, and any silane coupling agent that is conventionally used in combination with silica in the tire industry can be used. Examples of the silane coupling agent include: mercapto-based silane coupling agents such as 3-mercaptopropyltrimethoxysilane and NXT-Z100, NXT-Z45, and NXT (3-octanoylthiopropyltriethoxysilane) manufactured by Momentive Performance Materials, Inc.; sulfide-based silane coupling agents such as bis(3-triethoxysilylpropyl)disulfide and bis(3-triethoxysilylpropyl)tetrasulfide; thioester-based coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. Among them, sulfide-based silane coupling agents and/or mercapto-based silane coupling agents are preferable, and mercapto-based silane coupling agents are more preferable. One of these silane coupling agents may be used alone, or two or more of these silane coupling agents may be used in combination.

The "mercapto-based silane coupling agent" means a silane coupling agent having a mercapto group and a silane coupling agent having a structure in which a mercapto group is protected by a protecting group. The mercapto-based silane coupling agent is not particularly limited, and is, for example, at least one compound selected from the group

consisting of a compound represented by the following chemical formula (1), a compound represented by the following chemical formula (2), and a compound containing a linking unit A represented by the following chemical formula (3) and a linking unit B represented by the following chemical formula (4). Among them, for the reason that the advantageous effects of the present disclosure can be more favorably achieved, at least one of the compound represented by the following chemical formula (1) and the compound containing the linking unit A represented by the following chemical formula (3) and the linking unit B represented by the following chemical formula (4) is preferable, and the compound represented by the following chemical formula (1) is more preferable.

[Chem.1]

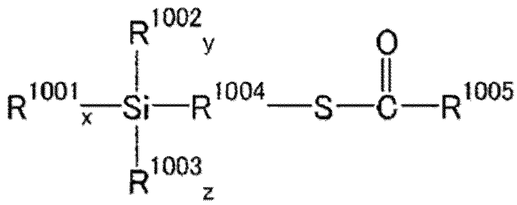

(1)

( wherein $R^{1001}$ represents a monovalent group selected from -Cl, -Br, $-OR^{1006}$, $-O(O=)CR^{1006}$,$-ON=CR^{1006}R^{1007}$, $-NR^{1006}R^{1007}$, and $-(OSiR^{1006}R^{1007})_h(OSiR^{1006}R^{1007}R^{1008})$ (wherein $R^{1006}$, $R^{1007}$, and $R^{1008}$ may be the same or may be different from each other and each represent a hydrogen atom or a monovalent hydrocarbon group having 1 to 18 carbon atoms, and an average of "h" is 1 to 4), $R^{1002}$ represents $R^{1001}$, a hydrogen atom, or a monovalent hydrocarbon group having 1 to 18 carbon atoms, $R^{1003}$ represents a $-[O(R^{1009}O)_j]-$ group ($R^{1009}$ is an alkylene group having 1 to 18 carbon atoms, and "j" is an integer from 1 to 4), $R^{1004}$ represents a divalent hydrocarbon group having 1 to 18 carbon atoms, $R^{1005}$ represents a monovalent hydrocarbon group having 1 to 18 carbon atoms, and "x", "y", and "z" are numerals that satisfy the relationships of $x + y + 2z = 3$, $0 \le x \le 3$, $0 \le y \le 2$, and $0 \le z \le 1$.)

[Chem.2]

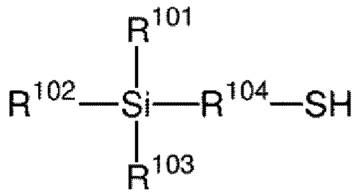

(2)

( wherein, $R^{101}$, $R^{102}$, and $R^{103}$ each independently represents an alkyl having 1 to 12 carbon atoms, an alkoxy having 1 to 12 carbon atoms, or a group represented by $-O-(R^{111}-O)_z-R^{112}$ (z pieces of $R^{111}$ each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms. )

[Chem.3]

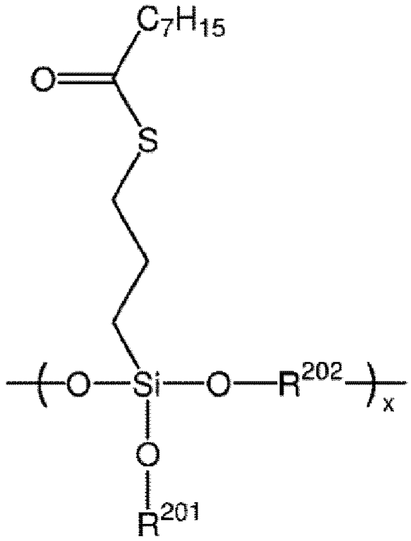

(3)

[Chem.4]

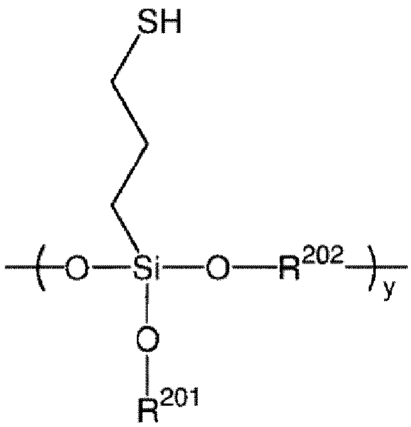

(4)

(wherein, x represents an integer of 0 or more; y represents an integer of 1 or more; $R^{201}$ represents hydrogen atom, or an alkyl having 1 to 30 carbon atoms, an alkenyl having 2 to 30 carbon atoms or an alkynyl having 2 to 30 carbon atoms ( the alkyl, the alkenyl, and the alkynyl may be substituted with a halogen atom, hydroxyl or carboxyl. ); and $R^{202}$ represents an alkylene having 1 to 30 carbon atoms, an alkenylene having 2 to 30 carbon atoms, or an alkynylene having 2 to 30 carbon atoms; where $R^{201}$ and $R^{202}$ may together form a ring structure.)

In the compound represented by the above chemical formula (1), preferably, $R^{1005}$, $R^{1006}$, $R^{1007}$, and $R^{1008}$ are each independently a group selected from the group consisting of a linear, cyclic, or branched alkyl group, alkenyl group, aryl group, and aralkyl group each having 1 to 18 carbon atoms. In addition, in the case where $R^{1002}$ is a monovalent hydrocarbon group having 1 to 18 carbon atoms, $R^{1002}$ is preferably a group selected from the group consisting of a linear, cyclic, or branched alkyl group, alkenyl group, aryl group, and aralkyl group. $R^{1009}$ is preferably a linear, cyclic, or branched alkylene group, and is particularly preferably a linear alkylene group. Examples of $R^{1004}$ include an alkylene group having 1 to 18 carbon atoms, an alkenylene group having 2 to 18 carbon atoms, a cycloalkylene group having 5 to 18 carbon atoms, a cycloalkylalkylene group having 6 to 18 carbon atoms, an arylene group having 6 to 18 carbon atoms, and an aralkylene group having 7 to 18 carbon atoms. The alkylene group and the alkenylene group may each be either linear or branched, and the cycloalkylene group, the cycloalkylalkylene group, the arylene group, and the aralkylene group may each have a functional group, such as a lower alkyl group, on the ring thereof. $R^{1004}$ is preferably an alkylene group having 1 to 6 carbon atoms, and is particularly preferably a linear alkylene group such as a methylene group, an ethylene group, a trimethylene group, a tetramethylene group, a pentamethylene group, and a hexamethylene group.

Specific examples of $R^{1002}$, $R^{1005}$, $R^{1006}$, $R^{1007}$, and $R^{1008}$ in chemical formula (1) include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a

naphthylmethyl group.

Examples of the linear alkylene group as $R^{1009}$ in chemical formula (1) include a methylene group, an ethylene group, an n-propylene group, an n-butylene group, and a hexylene group, and examples of the branched alkylene group as $R^{1009}$ in chemical formula (1) include an isopropylene group, an isobutylene group, and a 2-methylpropylene group.

Specific examples of the silane coupling agent represented by chemical formula (1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. Among them, 3-octanoylthiopropyltriethoxysilane is preferable.

The silane coupling agent represented by chemical formula (1) has a thioester structure (that is, a protected mercapto group) in the molecule thereof and has low reactivity with the rubber component up to high temperatures, and strong bond between the rubber component, the silane coupling agent, and the silica during kneading can be suppressed, and the silica can be appropriately dispersed. Thus, the advantageous effects of the present disclosure tend to be able to be more favorably achieved.

Examples of the compound represented by the chemical formula (2) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following chemical formula (5) (Si363 manufactured by Evonik Degussa GmbH), and the like. Among them, the compound represented by the following chemical formula (5) can be appropriately used. They may be used alone, or two or more thereof may be used in combination.

[Chem.5]

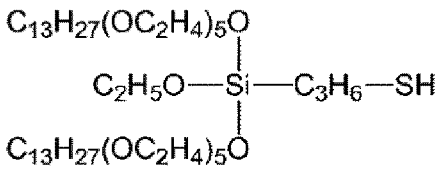

(5)

Examples of the compound comprising the bond unit A represented by the chemical formula (3) and the bond unit B represented by the chemical formula (4) include, for example, those manufactured and sold by Momentive Performance Materials, etc. They may be used alone, or two or more thereof may be used in combination.

From the viewpoint of enhancing the dispersibility of the silica, the amount (total amount when a plurality of silane coupling agents is used in combination) of the silane coupling agent per 100 parts by mass of silica is preferably more than 1 part by mass, more preferably more than 3 parts by mass, further preferably more than 5 parts by mass, and still further preferably more than 7 parts by mass. From the viewpoint of preventing deterioration in wear resistance, the amount is preferably less than 20 parts by mass, more preferably less than 15 parts by mass, and further preferably less than 12 parts by mass.

[Other Ingredients]

In addition to the above components, the rubber composition according to the present embodiment can contain ingredients that are conventionally and generally used in the tire industry, such as a softener, wax, stearic acid, zinc oxide, an antioxidant, a vulcanizing agent, and a vulcanization accelerator, as appropriate.

Examples of the softener include a resin component, an oil, and a liquid rubber.

The resin component that can be used in the present embodiment is not particularly limited, resins that are commonly used in the tire industry can be used, and examples of such resins include adhesive resins such as C9-based resins, C5-based resins, C5C9-based resins, dicyclopentadiene-based resins, aromatic vinyl-based resins, coumarone-based resins, indene-based resins, terpene-based resins, rosin-based resins, and phenol-based resins. One of these resin components may be used alone, or two or more of these resin components may be used in combination.

C9-based resins refer to resins obtained by polymerizing C9 fractions, and may be resins obtained by polymerizing C9 fractions alone, or may be copolymers obtained by copolymerizing C9 fractions and other components. For example, a resin obtained by copolymerizing dicyclopentadiene (DCPD) and a C9 fraction is referred to as DCPD/C9 resin. These resins may also be hydrogenated or modified. Examples of C9 fractions include petroleum fractions having 8 to 10 carbon atoms such as vinyltoluene, alkylstyrene, coumarone, indene, methylindene, and dicyclopentadiene. One of these C9-based resins may be used alone, or two or more of these C9-based resins may be used in combination.

C5-based resins refer to resins obtained by polymerizing C5 fractions, and these resins may be hydrogenated or modified. Examples of C5 fractions other than dicyclopentadiene include petroleum fractions having 4 to 5 carbon atoms such as cyclopentadiene, isoprene, pentane, isopentane, neopentane, pentene, and pentadiene. One of these C5-based resins may be used alone, or two or more of these C5-based resins may be used in combination.

C5C9-based resins refer to resins obtained by copolymerizing the C5 fractions and the C9 fractions, and these resins may be hydrogenated or modified. As C5C9-based petroleum resins, for example, products commercially available from Tosoh Corporation, Zibo Luhua Hongjin New Material Group Co., Ltd., etc., can be used. One of these C5C9-based resins may be used alone, or two or more of these C5C9-based resins may be used in combination.

Dicyclopentadiene-based resins refer to resins containing cyclopentadiene (CPD) or dicyclopentadiene (DCPD) as a monomer component, and these resins may be hydrogenated or modified. Examples of dicyclopentadiene-based resins include DCPD/C9 resins containing dicyclopentadiene and the C9 fractions as monomer components (the DCPD/C9 resins may be hydrogenated or modified). DCPD/C9 resins containing dicyclopentadiene and styrene as monomer components are preferable, and DCPD/C9 resins containing dicyclopentadiene, styrene, and indene as monomer components are particularly preferable. As dicyclopentadiene-based resins, for example, products commercially available from Exxon Mobil Corporation, ENEOS Corporation, Zeon Corporation, Maruzen Petrochemical Co., Ltd., etc., can be used. One of these dicyclopentadiene-based resins may be used alone, or two or more of these dicyclopentadiene-based resins may be used in combination.

Aromatic vinyl-based resins refer to resins each containing an aromatic vinyl compound such as styrene, α-methylstyrene, vinyltoluene, and p-chlorostyrene as a monomer component whose amount is the largest, and these resins may be hydrogenated or modified. As an aromatic vinyl-based resin, a homopolymer of α-methylstyrene or styrene or a copolymer of α-methylstyrene and styrene is preferable, and a copolymer of α-methylstyrene and styrene is more preferable, for the reasons that the polymer is economic, is easily processed, and has excellent heat generation properties. As aromatic vinyl-based resins, for example, products commercially available from Kraton Corporation, Eastman Chemical Company, Mitsui Chemicals, Inc., etc., can be used. One of these aromatic vinyl-based resins may be used alone, or two or more of these aromatic vinyl-based resins may be used in combination.

Coumarone-based resins refer to resins containing coumarone as a monomer component, and these resins may be hydrogenated or modified. Examples of coumarone-based resins include coumarone-indene resins containing coumarone and indene as monomer components, and coumarone-indene-styrene resins containing coumarone, indene, and styrene as monomer components. One of these coumarone-based resins may be used alone, or two or more of these coumarone-based resins may be used in combination.

Indene-based resins refer to resins containing indene as a monomer component, and these resins may be hydrogenated or modified. Examples of indene-based resins include coumarone-indene resins containing coumarone and indene as monomer components, and coumarone-indene-styrene resins containing coumarone, indene, and styrene as monomer components. One of these indene-based resins may be used alone, or two or more of these indene-based resins may be used in combination.

Terpene-based resins refer to resins each containing a terpene compound such as α-pinene, β-pinene, limonene, and dipentene as a monomer component whose amount is the largest, and these resins may be hydrogenated or modified. Specific examples of terpene-based resins include: polyterpene resins each containing one or more of the terpene compounds alone as a monomer component; aromatic modified terpene resins each containing the terpene compound and an aromatic compound as monomer components; and terpene-phenol resins each containing the terpene compound and a phenol-based compound as monomer components. Examples of aromatic compounds as monomer components of aromatic modified terpene resins include styrene, α-methylstyrene, vinyltoluene, and divinyltoluene. Examples of phenol-based compounds as monomer components of terpene-phenol resins include phenol, bisphenol A, cresol, and xylenol. One of these terpene-based resins may be used alone, or two or more of these terpene-based resins may be used in combination.

Rosin-based resins refer to resins containing rosin acid compounds such as abietic acid, neoabietic acid, palustric acid, and isopimaric acid, and these resins may be hydrogenated or modified. The rosin-based resins are not particularly limited, and examples of the rosin-based resins include natural rosin resins, and rosin-modified resin modified by hydrogenation, disproportionation, dimerization, esterification, etc. One of these rosin-based resins may be used alone, or two or more of these rosin-based resins may be used in combination.

Phenol-based resins refer to resins each containing a phenol compound such as phenol and cresol as a monomer component whose amount is the largest. The phenol-based resins are not particularly limited, and examples of the phenol-based resins include phenol formaldehyde resins, alkylphenol formaldehyde resins, alkylphenol acetylene resins, and oil-modified phenol formaldehyde resins. One of these phenol-based resins may be used alone, or two or more of these phenol-based resins may be used in combination.

From the viewpoint of ride comfort and wet performance, the softening point of the resin component is preferably not lower than 80°C, more preferably not lower than 90°C, and further preferably not lower than 100°C. From the viewpoint of processability and improvement of the dispersibility of the rubber component and the fillers, the softening point of the

resin component is preferably not higher than 150°C, more preferably not higher than 140°C, and further preferably not higher than 130°C. The softening point of the resin is a temperature that is measured with a ring and ball softening point measuring device according to 7.7 in JIS K 6220-1: 2015 and at which a ball has descended.

In the case where the rubber composition contains a resin component, from the viewpoint of ride comfort and wet performance, the amount of the resin component per 100 parts by mass of the rubber component is preferably not less than 1 part by mass, more preferably not less than 3 parts by mass, and further preferably not less than 5 parts by mass. From the viewpoint of suppression of heat generation, the amount of the resin component is preferably not greater than 60 parts by mass, more preferably not greater than 50 parts by mass, further preferably not greater than 40 parts by mass, and particularly preferably not greater than 30 parts by mass.

Examples of the oil include process oils, vegetable fats and oils, and animal fats and oils. Examples of the process oils include paraffin-based process oils, naphthene-based process oils, and aroma-based process oils. In addition, a process oil that has a low content of a polycyclic aromatic (PCA) compound and for which environmental impact is taken into consideration can also be used. Examples of the low PCA content process oil include a mild extraction solvate (MES), a treated distillate aromatic extract (TDAE), and a heavy naphthenic oil.

In the case where the rubber composition contains an oil, from the viewpoint of improving processability, the amount of the oil per 100 parts by mass of the rubber component is preferably not less than 1 part by mass, more preferably not less than 3 parts by mass, and further preferably not less than 5 parts by mass. From the viewpoint of improving wear resistance, the amount of the oil is preferably not greater than 90 parts by mass, more preferably not greater than 70 parts by mass, further preferably not greater than 50 parts by mass, and particularly preferably not greater than 30 parts by mass.

The liquid rubber is not particularly limited as long as it is a polymer in a liquid state at room temperature (25°C), and examples of the liquid rubber include liquid butadiene rubber (liquid BR), liquid styrene-butadiene rubber (liquid SBR), liquid isoprene rubber (liquid IR), liquid styrene-isoprene rubber (liquid SIR), and liquid farnesene rubber. These liquid rubbers may be used individually, or two or more of these liquid rubbers may be used in combination.

In the case where the rubber composition contains a liquid rubber, the amount of the liquid rubber per 100 parts by mass of the rubber component is preferably not less than 1 part by mass, more preferably not less than 3 parts by mass, and further preferably not less than 5 parts by mass. The amount of the liquid rubber is preferably not greater than 50 parts by mass, more preferably not greater than 40 parts by mass, and further preferably not greater than 20 parts by mass.

The wax is not particularly limited, and examples of the wax include: petroleum waxes such as paraffin wax and microcrystalline wax; and synthesized waxes such as polymers of ethylene, propylene, and the like. As commercially available products, products of OUCHI SHINKO CHEMICAL INDUSTRIAL CO., LTD., NIPPON SEIRO CO., LTD., Seiko Chemical Co., Ltd., etc., can be used. These waxes may be used individually, or two or more of these waxes may be used in combination.

**In** the case where the rubber composition contains a wax, from the viewpoint of the weather resistance of the rubber, the amount of the wax per 100 parts by mass of the rubber component is preferably not less than 0.5 parts by mass, more preferably not less than 1.0 part by mass, and further preferably not less than 1.5 parts by mass. From viewpoint of preventing whitening of the tire due to blooming, the amount of the wax is preferably not greater than 10 parts by mass and more preferably not greater than 5.0 parts by mass.

The antioxidant is not particularly limited, and examples of the antioxidant include antioxidants such as amine-based compounds, quinoline-based compounds, quinone-based compounds, phenol-based compounds, imidazole-based compounds, and carbamic acid metal salts. Phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, and N-cyclohexyl-N'-phenyl-p-phenylenediamine, and quinoline-based antioxidants such as a 2,2,4-trimethyl-1,2-dihydroquinoline polymer and 6-ethoxy-2,2,4-trimethyl-1,2-dihydroquinoline are preferable. These antioxidants may be used individually, or two or more of these antioxidants may be used in combination.

**In** the case where the rubber composition contains an antioxidant, from the viewpoint of the ozone crack resistance of the rubber, the amount of the antioxidant per 100 parts by mass of the rubber component is preferably not less than 0.5 parts by mass, more preferably not less than 1.0 part by mass, and further preferably not less than 1.5 parts by mass. From the viewpoint of wear resistance and wet grip performance, the amount of the antioxidant is preferably not greater than 10 parts by mass and more preferably not greater than 5.0 parts by mass.

As the stearic acid, a conventionally known one can be used, and, for example, products of NOF Corporation, Kao Corporation, FUJIFILM Wako Pure Chemical Corporation, Chiba Fatty Acid Co., Ltd., etc., can be used. These stearic acids may be used individually, or two or more of these stearic acids may be used in combination.

In the case where the rubber composition contains stearic acid, from the viewpoint of processability, the amount of the stearic acid per 100 parts by mass of the rubber component is preferably not less than 0.5 parts by mass, more preferably not less than 1.0 part by mass, and further preferably not less than 1.5 parts by mass. From the viewpoint of a vulcanization rate, the amount of the stearic acid is preferably not greater than 10 parts by mass and more preferably not greater than 5.0 parts by mass.

As the zinc oxide, a conventionally known one can be used, and, for example, products of Mitsui Mining &

Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used. These zinc oxides may be used individually, or two or more of these zinc oxides may be used in combination.

In the case where the rubber composition contains zinc oxide, from the viewpoint of processability, the amount of the zinc oxide per 100 parts by mass of the rubber component is preferably not less than 0.5 parts by mass, more preferably not less than 1.0 part by mass, and further preferably not less than 1.5 parts by mass. From the viewpoint of wear resistance, the amount of the zinc oxide is preferably not greater than 10 parts by mass and more preferably not greater than 5.0 parts by mass.

As the vulcanizing agent, sulfur is suitably used. As the sulfur, powdery sulfur, oil-treated sulfur, precipitated sulfur, colloidal sulfur, insoluble sulfur, highly dispersible sulfur, etc., can be used.

In the case where the rubber composition contains sulfur as a vulcanizing agent, from the viewpoint of ensuring a sufficient vulcanization reaction, the amount of the sulfur per 100 parts by mass of the rubber component is preferably not less than 0.1 parts by mass, more preferably not less than 0.5 parts by mass, and further preferably not less than 1.0 part by mass. From the viewpoint of prevention of deterioration, the amount of the sulfur is preferably not greater than 5.0 parts by mass, more preferably not greater than 4.0 parts by mass, and further preferably not greater than 3.5 parts by mass. When oil-containing sulfur is used as a vulcanizing agent, the amount of the vulcanizing agent is represented as the amount of pure sulfur contained in the oil-containing sulfur.

Examples of vulcanizing agents other than sulfur include alkylphenol-sulfur chloride condensates, sodium 1,6-hexamethylene dithiosulfate dihydrate, and 1,6-bis(N,N'-dibenzylthiocarbamoyldithio)hexane. As these vulcanizing agents other than sulfur, products commercially available from Taoka Chemical Co., Ltd., LANXESS, Flexsys, etc., can be used.

Examples of the vulcanization accelerator include sulfenamide-based vulcanization accelerators, thiazole-based vulcanization accelerators, thiuram-based vulcanization accelerators, thiourea-based vulcanization accelerators, guanidine-based vulcanization accelerators, dithiocarbamic acid-based vulcanization accelerators, aldehyde-amine-based vulcanization accelerators, aldehyde-ammonia-based vulcanization accelerators, imidazoline-based vulcanization accelerators, and xanthate-based vulcanization accelerators. These vulcanization accelerators may be used individually, or two or more of these vulcanization accelerators may be used in combination. Among them, from the viewpoint of more suitably obtaining the desired effect, one or more vulcanization accelerators selected from the group consisting of sulfenamide-based vulcanization accelerators, guanidine-based vulcanization accelerators, and thiazole-based vulcanization accelerators are preferable, and sulfenamide-based vulcanization accelerators are more preferable.

Examples of the sulfenamide-based vulcanization accelerators include N-tert-butyl-2-benzothiazolyl sulfenamide (TBBS), N-cyclohexyl-2-benzothiazolyl sulfenamide (CBS), and N,N-dicyclohexyl-2-benzothiazolyl sulfenamide (DCBS). Among them, N-tert-butyl-2-benzothiazolyl sulfenamide (TBBS) and N-cyclohexyl-2-benzothiazolyl sulfenamide (CBS) are preferable.

Examples of the guanidine-based vulcanization accelerators include 1,3-diphenylguanidine (DPG), 1,3-di-o-tolylguanidine, 1-o-tolylbiguanide, a di-o-tolylguanidine salt of dicatechol borate, 1,3-di-o-cumenylguanidine, 1,3-di-o-biphenylguanidine, and 1,3-di-o-cumenyl-2-propionylguanidine. Among them, 1,3-diphenylguanidine (DPG) is preferable.

Examples of the thiazole-based vulcanization accelerators include 2-mercaptobenzothiazole, a cyclohexylamine salt of 2-mercaptobenzothiazole, and di-2-benzothiazolyl disulfide. Among them, 2-mercaptobenzothiazole is preferable.

In the case where the rubber composition contains a vulcanization accelerator, the amount of the vulcanization accelerator per 100 parts by mass of the rubber component is preferably not less than 1.0 part by mass, more preferably not less than 1.5 parts by mass, and further preferably not less than 2.0 parts by mass. The amount of the vulcanization accelerator is preferably not greater than 8.0 parts by mass, more preferably not greater than 7.0 parts by mass, further preferably not greater than 6.0 parts by mass, and particularly preferably not greater than 5.0 parts by mass. When the amount of the vulcanization accelerator is set to be within such a range, it tends to be possible to ensure fracture strength and elongation.

The rubber composition is produced, for example, by kneading the respective components described above, using a rubber kneading device such as an open roll and a Banbury mixer.

As for the kneading conditions, in a base kneading step of kneading the additives other than the vulcanizing agent and the vulcanization accelerator, the kneading temperature is normally 100 to 180°C and preferably 120 to 170°C. In a finish kneading step of kneading the vulcanizing agent and the vulcanization accelerator, the kneading temperature is normally 120°C or lower and preferably 85 to 110°C.

The produced rubber composition is processed into a predetermined shape using an extruder or the like. In a forming machine, the processed rubber composition is combined with sidewalls, etc., to prepare a green tire (unvulcanized tire). The green tire is vulcanized in a mold incorporated in a vulcanizing machine, thereby obtaining a tire. The tire is a crosslinked product of the green tire. The vulcanization temperature is normally 140 to 190°C and preferably 150 to 185°C.

The vulcanization time is normally 5 to 15 minutes.

The rubber composition described above is used for the tread of a tire (specifically, a cap portion which comes into contact with a road surface during running).

Next, a tire having a tread formed using this rubber composition will be described.

[Tire]

FIG. 1 shows part of a tire 2 according to an embodiment of the present invention. The tire 2 is mounted to a vehicle such as a truck or a bus. The tire 2 is a heavy duty tire.

FIG. 1 shows part of a section (hereinafter, meridian cross-section) of the tire 2 along a plane including a rotation axis of the tire 2. A double-pointed arrow AD indicates an axial direction of the tire 2. The axial direction of the tire 2 means a direction parallel to the rotation axis of the tire 2. A double-pointed arrow RD indicates a radial direction of the tire 2. A direction perpendicular to the sheet of FIG. 1 is a circumferential direction of the tire 2. Dash-dotted line EL extending radially indicates an equator plane of the tire 2. FIG. 2 shows part of the section shown in FIG. 1. FIG. 2 shows a bead portion B of the tire 2.

In the axial direction, a side away from the equator plane corresponds to an axially outside of the tire 2, and a side close to the equator plane corresponds to an axially inside of the tire 2. A direction indicated by an arrow RD 1 corresponds to a radially outward direction of the tire 2, whereas a direction indicated by an arrow RD2 corresponds to a radially inward direction of the tire 2.

The tire 2 shown in FIG. 1 is in a state of being fitted on a rim R (normal rim). Axially extending solid line BBL indicates a bead base line. The bead base line is a line prescribing a rim diameter (see JATMA and the like) of the rim R.

The tire 2 includes a tread 4, a pair of sidewalls 6, a pair of chafers 8, a pair of beads 10, a carcass 12, a reinforcing layer 14, a pair of cushion layers 16, a pair of filler reinforcing layers 18, a pair of interlayer strips 20, an inner liner 22, and a tag member 24. Although FIG. 1 does not show a left portion of the meridian cross-section with respect to the equator plane, the tire 2 excluding the tag member 24 has an internal structure symmetric with respect to the equator plane.

The tread 4 is positioned radially outside the carcass 12. The tread 4 extends circumferentially. The tread 4 includes a tread surface 26. The tread surface 26 of the tire 2 comes into contact with a road surface. The tread 4 includes a groove 28 carved therein. The groove 28 thus provided forms a tread pattern. The tread 4 includes the tread pattern. The groove 28 in the tire 2 is configured symmetrically with respect to the equator plane.

An equator is located at a position Eq. The equator Eq is a point of intersection between the tread surface 26 and the equator plane. In a case where the groove 28 is positioned on the equator plane, the equator is specified based on a virtual tread surface obtained assuming that the groove 28 is not provided. In the tire 2 in a normal state, a radial distance from the bead base line to the equator Eq is a section height (see JATMA and the like) of the tire 2.

The tread surface 26 has ends indicated as positions TE. In the tire, when the end of the tread surface cannot be identified from the appearance, assumed as the end of the tread surface is a position on an outer surface of the tire corresponding to an axially outer end of a ground-contact surface obtained by applying a normal load to the tire in the normal state with a camber angle set to 0 degrees and bringing the tire into contact with a plane.

In the present specification, though not shown, the tread surface 26 includes an end TE that is positioned on a left side of the equator plane and is also referred to as first end TE1, and the end TE of the tread surface 26 which is positioned on a right side of the equator plane and is also referred to as second end TE2.

FIG. 1 includes an arrow WT indicating a length as a width of the tread surface 26. The width WT of the tread surface 26 is an axial distance from the first end TE to the second end TE of the tread surface 26. The width WT of the tread surface 26 is measured along the tread surface 26. In the present invention, the width WT of the tread surface 26 is used as an axial width Wt of the tread 4.

FIG. 3 shows a section of the groove 28. FIG. 3 shows the section of the groove 28 along a plane perpendicular to a length direction of the groove 28. The section of the groove 28 is a section of a shoulder circumferential groove to be described later. The groove 28 will be described in terms of its principal configuration with reference to FIG. 3.

The groove 28 has a pair of wall surfaces 28S including a groove opening 28M, and a bottom surface 28B including a groove bottom 28T. The groove 28 has a groove width represented as a shortest distance (hereinafter, distance between the wall surfaces) between a first wall surface 28S and a second wall surface 28S of the pair of wall surfaces 28S. The distance between the wall surfaces is measured along a plane including a pair of edges 28E forming the groove opening 28M, or a plane parallel to the plane.

FIG. 3 includes a double-pointed arrow WG indicating a length as the groove width at the groove opening 28M of the groove 28. The groove width WG is measured along the plane including the pair of edges 28E forming the groove opening 28M. In a case where a portion at the groove opening 28M of the groove 28 is processed to be tapered, the groove width at the groove opening 28M of the groove 28 is represented based on a virtual edge obtained assuming that the groove opening is not processed to be tapered. A double-pointed arrow DG indicates a length as a groove depth of the groove 28. The groove depth DG of the groove 28 is represented as the shortest distance from the plane including the left

and right edges 28E to the groove bottom 28T of the groove 28. The position of the groove 28, the groove width WG, and the groove depth DG are determined as appropriate in accordance with specifications of the tire 2.

The groove bottom 28T is located at a deepest position in the section of the groove 28. A distance from the plane including the left and right edges 28E forming the groove opening 28M to the bottom surface 28B is measured along a normal line of the plane. The distance from the plane to the bottom surface 28B is maximized at the groove bottom 28T. The normal line of the plane including the left and right edges 28E extends in a depth direction of the groove 28. In a case where the bottom surface 28B is provided with a projection, the groove bottom 28T is specified based on a virtual bottom surface obtained assuming that the projection is not provided.

The groove 28 having the groove width WG less than 1.0 mm at the groove opening 28M is referred to as sipe. The groove 28 other than the sipe is referred to as ordinary groove and has the groove width WG not less than 1.0 mm at the groove opening 28M. If an ordinary groove has a small groove width and includes a pair of wall surfaces that can come into contact with each other when the tread comes into contact with a road surface to be deformed, such an ordinary groove is referred to as narrow groove. If an ordinary groove has a large groove width and includes a pair of wall surfaces that do not come into contact with each other even when the tread comes into contact with a road surface to be deformed, such an ordinary groove is referred to as main groove.

The tread 4 of the tire 2 includes a plurality of circumferential grooves 30 carved to be aligned axially. The circumferential grooves 30 extend continuously in the circumferential direction.

In the present invention, in the case where the tread includes the plurality of circumferential grooves aligned axially, two of the circumferential grooves positioned axially outermost are the shoulder circumferential grooves. The circumferential groove positioned on the equator plane is a center circumferential groove. In a case where no circumferential groove is provided on the equator plane, a circumferential groove closest to the equator plane is the center circumferential groove in the circumferential grooves positioned in a zone between the equator plane and each end of the tread surface. In a case where the center circumferential groove and the shoulder circumferential groove interpose any circumferential groove, the circumferential groove interposed between the center circumferential groove and the shoulder circumferential groove is a middle circumferential groove.

The tread 4 of the tire 2 includes four circumferential grooves 30. The four circumferential grooves 30 include two circumferential grooves 32 that are positioned axially outermost and are shoulder circumferential grooves. In the circumferential grooves 30 positioned in the zone between the equator plane and each of the ends TE of the tread surface 26, a circumferential groove 34 closest to the equator plane is the center circumferential groove. The tread 4 includes a pair of center circumferential grooves 34 and a pair of shoulder circumferential grooves 32.

FIG. 3 includes a double-pointed arrow WGs indicating a length as a groove width at a groove opening 32M of each of the shoulder circumferential grooves 32. From the viewpoint of contributions to drainage performance and traction performance, the shoulder circumferential grooves 32 each have the groove width WGs that is preferably not less than 2% and not greater than 10% of the width WT of the tread surface 26. FIG. 3 includes a double-pointed arrow DGs indicating a length as a groove depth of the shoulder circumferential grooves 32. The groove depth DGs of the shoulder circumferential grooves 32 is exemplarily not less than 10 mm and not greater than 21 mm. From the viewpoint that the tire 2 can exhibit excellent wet performance, the groove depth DGs is preferably not less than 13 mm and not greater than 18 mm.

Each pf the shoulder circumferential grooves 32 has a large groove width, includes a pair of wall surfaces 32S that do not come into contact with each other even when the tread 4 comes into contact with a road surface to be deformed, and is also referred to as circumferential main groove MG. The tread 4 of the tire 2 includes the plurality of circumferential grooves 30 including two circumferential main grooves MG positioned axially outermost. The pair of wall surfaces 32S of each of the two circumferential main grooves MG do not come into contact with each other even when the tread 4 comes into contact with a road surface to be deformed.

As described above, the tread 4 includes the plurality of circumferential grooves 30. The plurality of circumferential grooves 30 provides the tread 4 with a plurality of land portions 36.

In the present invention, the plurality of land portions formed on the tread includes two land portions that are positioned axially outermost as shoulder land portions. The land portion positioned on the equator plane is a center land portion. In a case where no land portion is provided on the equator plane, a land portion closest to the equator plane is the center land portion in the land portions positioned in the zone between the equator plane and each end of the tread surface. Any land portion interposed between the center land portion and the shoulder land portion is a middle land portion.

The tread 4 of the tire 2 includes five land portions 36. The five land portions 36 include two land portions 38 that are positioned axially outermost as the shoulder land portions. The shoulder land portions 38 each include the end TE of the tread surface 26. The center land portion corresponds to a land portion 40 positioned on the equator plane. The center land portion 40 and each of the shoulder land portions 38 interpose a land portion 42 as the middle land portion. The tread 4 includes the center land portion 40, a pair of middle land portions 42, and a pair of shoulder land portions 38. Though not detailed, the land portions 36 have widths that are determined as appropriate in accordance with the specifications of the tire 2.

The tread 4 includes a base portion 44 and a cap portion 46. The base portion 44 is formed from a crosslinked

rubber. Though not detailed, the base portion 44 of the tire 2 is formed from a typical crosslinked rubber as a crosslinked rubber forming a base portion of a heavy duty tire. The base portion 44 covers the reinforcing layer 14. The cap portion 46 is positioned radially outside the base portion 44. The cap portion 46 covers the base portion 44. The cap portion 46 has the tread surface 26. The cap portion 46 is formed from a crosslinked rubber. The cap portion 46 of the tire 2 is formed using the rubber composition described above. The crosslinked rubber forming the cap portion 46 is a crosslinked product of the rubber composition described above.

The sidewalls 6 are provided continuously to end portions of the tread 4, respectively. The sidewalls 6 are positioned axially outside the carcass 12. The sidewalls 6 have radially outer ends SG positioned radially inside the ends TE of the tread surface 26. The sidewalls 6 have radially inner ends SU each positioned radially between an end of a turned-up portion of a carcass ply to be described later and a radially outer end FG of the rim R. The sidewalls 6 are each formed from a crosslinked rubber. The sidewalls 6 have a complex elastic modulus not less than 2.0 MPa and not greater than 6.0 MPa.

A position PW indicates an axially outer end (hereinafter, outer end PW) of the tire 2. In a case where the tire 2 has an outer surface provided with decoration such as a pattern or a character, the outer end PW is specified based on a virtual outer surface obtained assuming that the outer surface is provided with no decoration. The tire 2 has a maximum width at the outer end PW. The outer end PW is also referred to as maximum width position. The tire 2 has a section width (see JATMA and the like) as an axial distance from a first maximum width position PW (not shown) to a second maximum width position PW obtained in the tire 2 in the normal state.

FIG. 1 includes a double-pointed arrow H indicating a length as a radial distance from the bead base line to the maximum width position PW. The radial distance H is also referred to as radial height at the maximum width position PW. In the tire 2 in the normal state, a ratio of the radial height H at the maximum width position PW to the section height of the tire 2 is not less than 0.40 and not greater than 0.60.

The chafers 8 are positioned radially inside the sidewalls 6, respectively. The chafers 8 are in contact with the rim R. A position CG indicates each radially outer end of the chafers 8. The chafers 8 are each formed from a crosslinked rubber having wear resistance. The chafers 8 have a complex elastic modulus not less than 10 MPa and not greater than 15 MPa.

The outer ends CG of the chafers 8 are positioned radially outside the inner ends SU of the sidewalls 6, respectively. The outer ends CG of the chafers 8 are covered with the sidewalls 6, respectively. The outer ends CG of the chafers 8 are in contact with the beads 10 (specifically, the outer apexes to be described later), respectively. FIG. 2 includes a double-pointed arrow C indicating a length as a radial distance from the bead base line to the outer end CG of the chafer 8. The radial distance C is also referred to as radial height of the chafer 8.

The beads 10 are positioned axially inside the chafers 8, respectively. The beads 10 are positioned radially inside the sidewalls 6, respectively.

The beads 10 each include a core 48 and an apex 50. The core 48 extends circumferentially. Though not shown, the core 48 includes a wound steel wire. The core 48 has a substantially hexagonal sectional shape. The apex 50 is positioned radially outside the core 48. The apex 50 extends radially outward from the core 48. The apex 50 is tapered outward. The apex 50 has a radially outer end AG positioned radially outside the outer end CG of the chafer 8. The outer end AG of the apex 50 is positioned radially inside the maximum width position PW.

FIG. 2 includes a double-pointed arrow L indicating a length as a radial distance from the bead base line to the outer end AG of the apex 50. The radial distance L is also referred to as radial height of the apex 50. In this tire 2, from the viewpoint of well balancing between stiffness of the bead portion B and flection of the tire 2, a ratio (L/H) of the radial height L of the apex 50 to the radial height H at the maximum width position PW is preferably not less than 0.55 and not greater than 0.95. From a similar viewpoint, a ratio (L/C) of the radial height L of the apex 50 to the radial height C of the chafer 8 is preferably not less than 1.08 and not greater than 1.54.

The apex 50 includes an inner apex 52 and an outer apex 54. The inner apex 52 is positioned radially outside the core 48. The outer apex 54 is positioned radially outside the inner apex 52.

The inner apex 52 is tapered outward. The inner apex 52 has a radially outer end UAG positioned radially inside the outer end CG of the chafer 8. The inner apex 52 is formed from a hard crosslinked rubber. The inner apex 52 has a complex elastic modulus not less than 60 MPa and not greater than 90 MPa.

The outer apex 54 is thick around the outer end UAG of the inner apex 52. The outer apex 54 is tapered inward and tapered outward from such a thick portion. The outer apex 54 has a radially inner end SAU positioned radially inside the inner end SU of the sidewall 6. The outer apex 54 has an outer end SAG corresponding to the outer end AG of the apex 50. The outer apex 54 is softer than the inner apex 52. The outer apex 54 is formed from a soft crosslinked rubber. The outer apex 54 has a complex elastic modulus not less than 3.0 MPa and not greater than 6.0 MPa.

Each of the apexes 50 in the tire 2 further includes an edge strip 56. The edge strip 56 is positioned axially outside the outer apex 54 to form part of an outer surface of the apex 50. The edge strip 56 is positioned radially between the outer end CG of the chafer 8 and the inner end SAU of the outer apex 54. The edge strip 56 is formed from a crosslinked rubber. The edge strip 56 is softer than the chafer 8 and harder than the outer apex 54. The edge strip 56 has a complex elastic

modulus not less than 7.0 MPa and not greater than 12 MPa.

The carcass 12 is positioned inside the tread 4, the pair of sidewalls 6, and the pair of chafers 8. The carcass 12 extends between the pair of beads 10. The carcass 12 of the tire 2 has a radial structure.

The carcass 12 includes at least one carcass ply 58. The carcass 12 of the tire 2 is formed from a single carcass ply 58. The carcass ply 58 is turned up at the beads 10.

The carcass ply 58 includes a ply body 60 and a pair of turned-up portions 62. The ply body 60 extends between the pair of beads 10, that is, between a first bead 10 and a second bead 10 (not shown). The turned-up portions 62 are connected to the ply body 60 and are turned up at the beads 10, respectively. The turned-up portions 62 of the tire 2 are turned up at the beads 10 outward from axially insides, respectively. The turned-up portions 62 each have an end FE positioned radially inside the outer end UAG of the inner apex 52. The end FE of the turned-up portion 62 is in contact with the edge strip 56. The inner end SU of each of the sidewalls 6 is positioned radially inside the end FE of the turned-up portion 62.

Though not shown, the carcass ply 58 includes a large number of carcass cords arranged parallelly. The carcass cords are covered with a topping rubber. The carcass cords cross the equator plane. The carcass cords cross the equator plane at an angle not less than 70°and not greater than 90°. The carcass cords of the tire 2 are made of steel. The carcass cords are steel cords.

FIG. 2 includes a double-pointed arrow N indicating a length as a radial distance from the bead base line to the end FE of the turned-up portion 62. The radial distance N is also referred to as radial height of the turned-up portion 62. In the tire 2, a ratio (N/H) of the radial height N of the turned-up portion 62 to the radial height H at the maximum width position PW is set within a range not less than 0.25 and not greater than 0.45.

The cushion layers 16 are positioned between the reinforcing layer 14 and the carcass 12 at respective ends 14e of the reinforcing layer 14. The cushion layers 16 are each formed from a soft crosslinked rubber.

The filler reinforcing layers 18 are positioned between the carcass 12 and the chafers 8, respectively.

The filler reinforcing layers 18 are positioned outside the carcass 12, and are turned up at the beads 10. The filler reinforcing layers 18 are disposed to wrap radially inner portions of the beads 10 from radially inside the carcass 12. The filler reinforcing layers 18 each have an inner end RN positioned axially between the ply body 60 and the inner liner 22. The inner end RN of the filler reinforcing layer 18 is positioned radially between the outer end UAG of the inner apex 52 and the core 48. The filler reinforcing layers 18 each have an outer end RG positioned axially between the turned-up portion 62 and the chafer 8. The outer end RG of each of the filler reinforcing layers 18 is positioned radially between the end FE of the turned-up portion 62 and the core 48.

Though not shown, the filler reinforcing layers 18 each include a large number of filler cords arranged parallelly. The filler cords are covered with a topping rubber. The filler cords of the tire 2 are made of steel.

The interlayer strips 20 are each positioned axially between the chafer 8 and the apex 50 (specifically, the outer apex 54). The interlayer strip 20 has a radially outer end IG positioned radially inside the outer end CG of the chafer 8. The interlayer strip 20 and the edge strip 56 cover the end FE of the turned-up portion 62, and the interlayer strip 20 and the chafer 8 cover the outer end RG of the filler reinforcing layer 18 at a position axially outside the turned-up portion 62. Each of the interlayer strips 20 is formed from a crosslinked rubber. The interlayer strip 20 is substantially equal in stiffness to the edge strip 56. The interlayer strips 20 have a complex elastic modulus not less than 7.0 MPa and not greater than 12 MPa. The interlayer strip 20 being substantially equal in stiffness to the edge strip 56 means that a ratio of the complex elastic modulus of the interlayer strips 20 to the complex elastic modulus of the edge strip 56 is within a range not less than 0.8 and not greater than 1.2.

The inner liner 22 is positioned inside the carcass 12. The inner liner 22 is joined to an inner surface of the carcass 12 via an insulation (not shown) formed from a crosslinked rubber. The inner liner 22 forms an inner surface of the tire 2. The inner liner 22 is formed from a crosslinked rubber having excellent air impermeability.

The tag member 24 is incorporated in a boundary portion between a sidewall portion S and the bead portion B of the tire 2. The tag member 24 may be incorporated in the sidewall portion S or in the bead portion B.

The tire 2 includes the pair of sidewalls 6, and the tag member 24 of the tire 2 is provided adjacent to one of the pair of sidewalls 6. Alternatively, the tire 2 may include a pair of tag members 24, one of which may be provided adjacent to one of the sidewalls 6 and the other one of which may be provided adjacent to the other one of the sidewalls 6. From the viewpoint of suppressing deterioration in durability, the tag member 24 is preferably provided adjacent to only one of the pair of sidewalls 6. There may be provided a plurality of tag members 24 at circumferential intervals. However, from the viewpoint of suppressing deterioration in durability, the single tag member 24 is more preferably provided adjacent to only one of the sidewalls 6.

As shown in FIG. 2, the tag member 24 is positioned axially between the bead 10 and the sidewall 6. The tag member 24 is positioned radially between the end FE of the turned-up portion 62 and the maximum width position PW of the tire 2.

FIG. 4 is a plan view of the tag member 24. FIG. 5 is a sectional view taken along line V-V in FIG. 4. The tag member 24 has a plate shape. The tag member 24 is long in a length direction and short in a width direction. As shown in

FIG. 2, the tag member 24 in the tire 2 is disposed such that a first end 24s in the width direction is positioned radially outside the tire 2 and a second end 24u is positioned radially inside. In the tag member 24 of the tire 2, the first end 24s is also referred to as outer end and the second end 24u is also referred to as inner end.

The tag member 24 includes an RFID tag 64. The RFID tag 64 is indicated by solid lines in FIG. 4 for convenient description, but is actually entirely covered with a protector 66. The tag member 24 includes the RFID tag 64, and the protector 66 entirely covering the RFID tag 64. The RFID tag 64 is positioned in a center of the tag member 24. The protector 66 is formed from a crosslinked rubber. In the tire 2, the protector 66 is formed from a crosslinked rubber having high electrical resistance in consideration of establishment of an excellent communication environment. The protector 66 of the tire 2 is substantially equal in stiffness to the outer apex 54. The protector 66 has a complex elastic modulus not less than 3.0 MPa and not greater than 6.0 MPa. The protector 66 being substantially equal in stiffness to the outer apex 54 means that a ratio of the complex elastic modulus of the protector 66 to the complex elastic modulus of the outer apex 54 is within a range not less than 0.8 and not greater than 1.2.

The RFID tag 64 is an electronic component that is small in size and light in weight. Though not detailed, the RFID tag 64 is the electronic component that is small in size and light in weight, including a semiconductor chip 68 including a transmitting-receiving circuit, a control circuit, a memory, and the like and chipped, and an antenna 70. Upon receipt of an interrogation radio wave, the RFID tag 64 transmits various data in the memory as a response radio wave using the interrogation radio wave as electric energy. The RFID tag 64 is a type of a passive radio frequency discrimination transponder.

The RFID tag 64 in the tire 2 includes the semiconductor chip 68 and a pair of antennas 70. The pair of antennas 70 interpose the semiconductor chip 68. Each of the antennas 70 extends from the semiconductor chip 68 in the length direction of the tag member 24.

The tag member 24 is a plate-shaped member including the RFID tag 64 covered with a crosslinked rubber. In the tag member 24, the RFID tag 64 is disposed to have a length direction matching the length direction of the tag member 24. The tag member 24 to be embedded in the tire 2 has a length TL not less than 60 mm and not greater than 80 mm. The tag member 24 has a width TW not less than 10 mm and not greater than 20 mm. The RFID tag 64 has a length GL not less than 30 mm and not greater than 50 mm.

FIG. 2 includes a position TU indicating a radially inner end of the RFID tag 64 (specifically, the semiconductor chip 68). A position TS indicates a radially outer end of the semiconductor chip 68, that is, a radially outer end of the RFID tag 64.

In the present invention, a case where the inner end TU of the RFID tag 64 in the tire 2 is positioned radially outside a position as a reference (hereinafter, reference position) is regarded as a case where the RFID tag 64 is positioned radially outside the reference position. A case where the outer end TS of the RFID tag 64 in the tire 2 is positioned radially inside the reference position is regarded as a case where the RFID tag 64 is positioned radially inside the reference position.

The reinforcing layer 14 is positioned radially outside the carcass 12. The reinforcing layer 14 is positioned radially inside the tread 4. The reinforcing layer 14 is positioned radially between the tread 4 and the carcass 12. The reinforcing layer 14 includes a belt 72 and a band 74.

The reinforcing layer 14 has the end 14e positioned adjacent to the second end TE2 of the tread surface 26 and referred to as second end 14e2 of the reinforcing layer 14. Though not shown, the reinforcing layer 14 has the end 14e positioned adjacent to the first end TE1 of the tread surface 26 and referred to as first end 14e1 of the reinforcing layer 14.

FIG. 6 shows a configuration of the reinforcing layer 14. A double-pointed arrow CD indicates the circumferential direction of the tire 2. A direction perpendicular to the sheet of FIG. 6 is the radial direction of the tire 2. A front side of the sheet corresponds to a radially outside, whereas a rear side of the sheet corresponds to a radially inside.

The belt 72 of the tire 2 includes four belt plies 76. The four belt plies 76 are arranged radially and include a first belt ply 76A, a second belt ply 76B, a third belt ply 76C, and a fourth belt ply 76D from the radially inside. The first belt ply 76A corresponds to the belt ply 76 positioned radially innermost. The fourth belt ply 76D corresponds to the belt ply 76 positioned radially outermost.

The belt 72 has only to include at least one belt ply 76. The belt 72 may be formed from one layer, two layers, or three layers of belt plies 76. The belt 72 may alternatively be formed from five or more layers of belt plies 76.

FIG. 1 includes a double-pointed arrow W1 indicating a length as an axial width of the first belt ply 76A. A double-pointed arrow W2 indicates a length as an axial width of the second belt ply 76B. A double-pointed arrow W3 indicates a length as an axial width of the third belt ply 76C. A double-pointed arrow W4 indicates a length as an axial width of the fourth belt ply 76D. The axial width of each of the belt plies 76 is represented as an axial distance from a first end 76e to a second end 76e of the belt ply 76.

The second belt ply 76B has the largest axial width W2 in the tire 2. The axial width W2 of the second belt ply 76B corresponds to an axial width of the belt 72, and the second belt ply 76B has an end 76Be corresponding to an end 72e of the belt 72. The end 72e of the belt 72 in the tire 2 also corresponds to the end 14e of the reinforcing layer 14. The fourth belt ply 76D has the smallest axial width W4. The axial width W1 of the first belt ply 76A is equal to the axial width W3 of the third belt ply 76C, or the axial width W1 of the first belt ply 76A is slightly larger than the axial width W3 of the third belt ply 76C.

In the present invention, a belt ply having a largest axial width among at least one belt ply is a reference belt ply.
As described above, the four belt plies 76 forming the belt 72 of the tire 2 include the second belt ply 76B as the belt ply 76 having the largest axial width. The second belt ply 76B is a reference belt ply BP in the tire 2. The axial width W2 of the second belt ply 76B corresponds to an axial width Wp of the reference belt ply BP of the tire 2.
As shown in FIG. 1, all the ends 76e of the four belt plies 76 are positioned axially outside the shoulder circumferential groove 32, in other words, the circumferential main groove MG positioned axially outermost. The fourth belt ply 76D positioned radially outermost has an end 76De that may alternatively be positioned axially inside the circumferential main groove MG.
From the viewpoint of securing stiffness of a tread portion T, a ratio (W1/WT) of the axial width W1 of the first belt ply 76A to the width WT of the tread surface 26 is preferably not less than 0.80 and not greater than 0.90. A ratio (W2/WT) of the axial width W2 of the second belt ply 76B to the width WT of the tread surface 26 is preferably not less than 0.85 and not greater than 0.95. A ratio (W3/WT) of the axial width W3 of the third belt ply 76C to the width WT of the tread surface 26 is preferably not less than 0.80 and not greater than 0.90. The axial width W4 of the fourth belt ply 76D is set appropriately in accordance with the specifications of the tire 2.
As shown in FIG. 6, the belt plies 76 forming the belt 72 each include a large number of belt cords 78 arranged parallelly. The belt cords 78 are indicated by solid lines in FIG. 6 for convenient description, but are actually covered with a belt topping rubber 80. The belt plies 76 each have cord ends not less than 15 ends/50 mm and not greater than 30 ends/50 mm.
The belt cords 78 are made of steel. As described above, the second belt ply 76B in the tire 2 corresponds to the reference belt ply BP. A material of the belt cord 78 in the reference belt ply BP is steel.
As described above, the belt 72 includes at least one belt ply 76. When the belt 72 includes at least two belt plies 76, the belt cords 78 in the belt ply 76 other than the reference belt ply BP may be cords made of organic fiber (hereinafter, organic fiber cords). In this case, examples of the organic fiber include nylon fiber, rayon fiber, polyester fiber, and aramid fiber. From the viewpoint of securing stiffness of the tread portion T, the belt cords 78 of all the belt plies 76 forming the belt 72 are preferably steel cords.
The belt cords 78 in each of the belt plies 76 are inclined from the circumferential direction. The belt cords 78 included in the first belt ply 76A have a direction of inclination (hereinafter, inclination direction of first belt cords 78A) identical to a direction of inclination (hereinafter, inclination direction of second belt cords 78B) of the belt cords 78 included in the second belt ply 76B. The inclination direction of the second belt cords 78B is opposite to a direction of inclination (hereinafter, inclination direction of third belt cords 78C) of the belt cords 78 included in the third belt ply 76C. The inclination direction of the third belt cords 78C is identical to a direction of inclination (hereinafter, inclination direction of fourth belt cords 78D) of the belt cords 78 included in the fourth belt ply 76D. The inclination direction of the first belt cords 78A may alternatively be opposite to the inclination direction of the second belt cords 78B. The inclination direction of the third belt cords 78C may alternatively be opposite to the inclination direction of the fourth belt cords 78D.
In FIG. 6, an angle θ1 is an angle (hereinafter, inclination angle θ1) of the first belt cords 78A relative to the circumferential direction. An angle θ2 is an angle (hereinafter, inclination angle θ2) of the second belt cords 78B relative to the circumferential direction. An angle θ3 is an angle (hereinafter, inclination angle θ3) of the third belt cords 78C relative to the circumferential direction. An angle θ4 is an angle (hereinafter, inclination angle θ4) of the fourth belt cords 78D relative to the circumferential direction.
Unless otherwise specified, the inclination angle of each of the belt cords 78 is represented as an angle of the belt cords 78 relative to the equator plane in the present invention.
The inclination angle θ1 of the first belt cords 78A, the inclination angle θ2 of the second belt cords 78B, the inclination angle θ3 of the third belt cords 78C, and the inclination angle θ4 of the fourth belt cords 78D are preferably not less than 10 degrees and not greater than 60 degrees. From the viewpoint of effectively restraining movement of the tread portion T and obtaining a ground-contact surface having a stable shape with smaller changes in shape, the inclination angle θ1 of the first belt cords 78A is more preferably not less than 40 degrees and not greater than 60 degrees. The inclination angle θ2 of the second belt cords 78B is more preferably not less than 15 degrees and not greater than 30 degrees, and is further preferably not less than 15 degrees and not greater than 20 degrees. The inclination angle θ3 of the third belt cords 78C is more preferably not less than 15 degrees and not greater than 30 degrees, and is further preferably not less than 15 degrees and not greater than 20 degrees. The inclination angle θ4 of the fourth belt cords 78D is more preferably not less than 15 degrees and not greater than 50 degrees.
From the viewpoint of effectively restraining movement of the tread portion T and obtaining a ground-contact surface having a stable shape with smaller changes in shape, the inclination angle θ3 of the third belt cords 78C is preferably substantially equal to the inclination angle θ2 of the second belt cords 78B although the inclination direction of the third belt cords 78C is reverse to the inclination direction of the second belt cords 78B. The inclination angle θ3 of the third belt cords 78C being substantially equal to the inclination angle θ2 of the second belt cords 78B means that a difference between the inclination angle θ3 and the inclination angle θ2 has an absolute value within 3 degrees.
The band 74 of the tire 2 includes a single full band 82. The band 74 is formed from one layer of the full band 82.

The band 74 may alternatively be formed from two layers, or three or more layers of full bands 82. The band 74 includes at least one full band 82. The band 74 may further include a pair of edge bands disposed to be axially separate from each other and interpose the equator plane.

As shown in FIG. 1, the full band 82 has an end 82e positioned axially outside the shoulder circumferential groove 32, in other words, the circumferential main groove MG positioned axially outermost. A double-pointed arrow WF indicates a length as an axial width of the full band 82. The axial width WF of the full band 82 is an axial distance from a first end 82e to a second end 82e (not shown) of the full band 82.

The end 82e of the full band 82 in the tire 2 is positioned axially between the end 76De of the fourth belt ply 76D and an end 76Ce of the third belt ply 76C. The end 82e of the full band 82 is positioned axially inside the end 76Be of the second belt ply 76B as the end 72e of the belt 72. The full band 82 is narrower than the first belt ply 76A, the second belt ply 76B, and the third belt ply 76C. The band 74 of the tire 2 is formed from the single full band 82. The band 74 has an end 74e positioned axially inside the end 72e of the belt 72.

As shown in FIG. 6, the full band 82 forming the band 74 includes a helically wound band cord 84. The full band 82 has a jointless structure. The band cord 84 is indicated by solid lines in FIG. 6 for convenient description, but is actually covered with a topping rubber 86. The full band 82 has cord ends typically not less than 20 ends/50 mm and not greater than 30 ends/50 mm.

In FIG. 6, an angle θd is an angle (hereinafter, inclination angle θd) of the band cord 84 relative to the circumferential direction. The inclination angle θd of the band cord 84 is preferably not greater than 5 degrees. The band cord 84 extends substantially circumferentially.

Unless otherwise specified, the inclination angle θd of the band cord 84 is represented as an angle of the band cord 84 relative to the equator plane in the present invention.

Though not detailed, the tire 2 shown in FIG. 1 is manufactured in accordance with a known method. Constituent elements such as the tread 4 and the sidewalls 6 are combined to prepare the tire 2 in an unvulcanized state, that is, a green tire (not shown). The green tire is pressurized and heated in a mold to obtain the tire 2.

As described above, the band 74 of the tire 2 includes the full band 82. The full band 82 is formed from a band strip 88 shown in FIG. 7. The band strip 88 has a band shape. The band strip 88 includes a single or a plurality of band cords 84. The band strip 88 shown in FIG. 7 includes five band cords 84. The band cords 84 are aligned in a width direction of the band strip 88 and extend in a length direction of the band strip 88. The band strip 88 is a cord array including the plurality of band cords 84 arrayed.

FIG. 7 includes a double-pointed arrow Dj indicating a length as an outer diameter (hereinafter, cord diameter Dj) of the band cords 84. The cord diameter Dj of the band cords 84 is set within a range not less than 1.0 mm and not greater than 2.0 mm.

As shown in FIG. 8, the full band 82 shown in FIG. 6 is formed by helically winding the band strip 88 from the first end 82e (hereinafter, first end 82e1) to the second end 82e (hereinafter, second end 82e2) of the full band 82. Upon formation of the full band 82, the band strip 88 has a first end 88e (hereinafter, first end BS1) which is set at a position corresponding to the first end 82e1 of the full band 82, and a second end 88e (hereinafter, second end BS2) which is set at a position corresponding to the second end 82e2 of the full band 82. The full band 82 is a crosslinked product of a band form obtained by helically winding the band strip 88. The full band 82 includes the first end BS1 and the second end BS2 of the band strip 88. A portion including the first end BS1 of the band strip 88 is referred to as first portion. A portion including the second end BS2 of the band strip 88 is referred to as second portion.

In the full band 82 shown in FIG. 8, the band strip 88 is wound such that the first portion including the first end BS1 and the second portion including the second end BS2 of the band strip 88 are axially overlapped with each other. The first end BS1 does not match the second end BS2 in circumferential position. The band strip 88 may alternatively be wound such that the first end BS1 matches the second end BS2 in circumferential position.

In a zone LZ shown in FIG. 8 from the first end BS1 to the second end BS2 of the band strip 88, the first portion including the first end BS1 and the second portion including the second end BS2 of the band strip 88 are overlapped with each other. The zone LZ where the first portion and the second portion of the band strip 88 are overlapped with each other is referred to as overlapped zone of the band strip 88. The full band 82 of the tire 2 includes the overlapped zone LZ of the band strip 88. FIG. 8 includes a position indicated by a dash-dotted line LM indicating a circumferential center of the overlapped zone LZ.

FIG. 9 is a view from the second end 82e2, of the full band 82 shown in FIG. 8. A direction perpendicular to the sheet of FIG. 9 is the axial direction of the tire 2. A position indicated by reference sign RA an axial center of the rotation axis of the tire 2. FIG. 9 shows the contour of the tire 2 and the tag member 24 by dotted lines.

The overlapped zone LZ of the band strip 88 in the full band 82 has a size represented as an angle between a line segment connecting the first end BS1 of the band strip 88 and the axial center RA of the rotation axis and a line segment connecting the second end BS2 of the band strip 88 and the axial center RA of the rotation axis, that is, a central angle. FIG. 9 includes an angle θp corresponding to the central angle of the overlapped zone LZ of the band strip 88. When the first end BS1 and the second end BS2 of the band strip 88 match each other in circumferential position, the central angle θp has zero

degrees.

FIG. 9 shows a zone CZ opposite by 180 degrees to the overlapped zone LZ. A position CM is a position opposite by 180 degrees to the circumferential center LM of the overlapped zone LZ. The axial width WF of the full band 82 is represented as an axial width of the full band 82 in a zone other than the overlapped zone LZ.

As described above, the band 74 of the tire 2 includes the at least one full band 82. The full band 82 is a constituent element of the tire 2 and is obtained by helically winding the band strip 88. The band 74 includes the at least one full band 82 composed of helically wound the band strip 88.

In the present invention, a full band having the largest axial width among the at least one full band forming the band is a reference full band.

As described above, the band 74 of the tire 2 is formed from one layer of the full band 82. The full band 82 is a reference full band BF having the largest axial width among the at least one full band forming the band 74. The inclination angle θd of the band cord 84 in the full band 82 described above is the inclination angle Aj of the band cord 84 in the reference full band BF. The axial width WF of the full band 82 corresponds to an axial width Wj of the reference full band BF of the tire 2.

The band cord 84 of the full band 82 in the tire 2 is made of steel. A material of the band cord 84 in the reference full band BF is steel.

As described above, the band 74 includes at least one full band 82. When the band 74 includes two or more layers of the full bands 82, the band cord 84 in the full band 82 other than the reference full band BF may be an organic fiber cord. In this case, examples of the organic fiber include nylon fiber, rayon fiber, polyester fiber, and aramid fiber. From the viewpoint of securing stiffness of the tread portion T, the band cords 84 of all the full bands 82 forming the band 74 are preferably steel cords.

As shown in FIG. 2, the RFID tag 64 of the tire 2 is positioned radially between the end FE of the turned-up portion 62 and the maximum width position PW of the tire 2. The RFID tag 64 is disposed at a location less likely to move in the tire 2. Such disposition suppresses an impact of the RFID tag 64 on durability.

The reinforcing layer 14 includes the belt 72 including the large number of belt cords 78 arranged parallelly, and the band 74 including the band cord 84 helically wound, so that the tire 2 can be deformed while being kept in a ring shape. The tire 2 is effectively suppressed from being deformed circumferentially and can thus be reduced in strain caused upon starting pushing a road surface and upon sending off the road surface. The reduction in strain suppresses an impact of the RFID tag 64 on durability.

The tire 2 including the reinforcing layer having the belt 72 and the band 74 can suppress an impact of the incorporated RFID tag 64 on durability.

The tread 4 of the tire 2 is formed from a rubber composition containing a butadiene rubber as a rubber component. The butadiene rubber has excellent low-temperature characteristics. The butadiene rubber decreases a glass-transition point of the rubber composition forming the tread 4. The butadiene rubber can provide the tread 4 with flexibility from a low-temperature range. In the rubber composition forming the tread 4, the amount CBR of the butadiene rubber in 100 parts by mass of the rubber component is not less than 10 parts by mass, and the amount BCB of the carbon black per 100 parts by mass of the rubber component is less than the amount BSi of the silica per 100 parts by mass of the rubber component. The tread 4 formed from the rubber composition is flexible to contribute to improvement in the ride comfort of the tire.

The amount CBR of the butadiene rubber, the amount BCB of the carbon black, and a ratio (Wj/Wt) of the axial width Wj of the reference full band BF to the axial width Wt of the tread 4 satisfy the following relational expression.

$$(CBR/BCB)/(Wj/Wt) \geq 0.45$$

The tire 2 can suppress an impact of the RFID tag 64 on durability as well as can improve ride comfort with excellent balance.

The tire 2 can suppress an impact of the incorporated RFID tag 64 on durability as well as can improve ride comfort.

From the viewpoint of improving ride comfort, the amount CBR, the amount BCB, and the ratio (Wj/Wt) preferably satisfy the following relational expression.

$$(CBR/BCB)/(Wj/Wt) \geq 0.53$$

From the viewpoint of maintaining excellent durability, the amount CBR, the amount BCB, and the ratio (Wj/Wt) preferably satisfy the following relational expression.

$$(CBR/BCB)/(Wj/Wt) \leq 7.00$$

From a similar viewpoint, the amount CBR, the amount BCB, and the ratio (Wj/Wt) more preferably satisfy the following relational expression.

$$(CBR/BCB)/(Wj/Wt) \leq 3.50$$

The ratio (Wj/Wt) of the axial width Wj of the reference full band BF to the axial width Wt of the tread 4 is preferably not less than 0.60 and not greater than 0.90.

When the ratio (Wj/Wt) is set to be not less than 0.60, the band 74 can contribute to suppression of deformation of the tire 2. The tire 2 can effectively suppress an impact of the RFID tag 64 on durability. The ratio (Wj/Wt) is more preferably not less than 0.70 from this viewpoint.

When ratio (Wj/Wt) is set to be not greater than 0.90, holding force of the band 74 is maintained appropriately. The tire 2 can be effectively deformed to improve ride comfort of the tire 2. The end 82e of the reference full band BF is disposed distant from an interface between the tread 4 and the sidewall 6, to suppress concentration of strain at the end 82e of the reference full band BF. The tire 2 can maintain excellent durability. Furthermore, this also suppresses an impact of the reference full band BF on weight of the tire, and the tire 2 can thus maintain low rolling resistance. The ratio (Wj/Wt) is more preferably not greater than 0.85 from this viewpoint.

As described above, the plurality of circumferential grooves 30 includes the two circumferential main grooves MG positioned axially outermost. As shown in FIG. 1, each of the ends of the reference full band BF is positioned axially outside one of the circumferential main grooves MG. This suppresses movement of a portion provided with the circumferential main groove MG although the circumferential groove 30 positioned axially outermost is the circumferential main groove MG. The tire 2 can maintain excellent wear resistance as well as can improve ride comfort. From this viewpoint, the ends of the reference full band BF are preferably positioned axially outside the circumferential main grooves MG, respectively.

The central angle θp of the overlapped zone LZ of the band strip 88 in the reference full band BF is preferably not greater than 150 degrees. This effectively suppresses vibration during high-speed running due to a wide portion and a narrow portion included in the reference full band BF obtained by winding the band strip 88. The tire 2 can improve ride comfort. From this viewpoint, the central angle θp is more preferably not greater than 120 degrees, further preferably not greater than 90 degrees, and particularly preferably not greater than 45 degrees.

As shown in FIG. 9, the tag member 24 is exemplarily disposed such that the position CM opposite by 180 degrees to the circumferential center LM of the overlapped zone LZ of the band strip 88 and the position of the RFID tag 64 circumferentially match each other. The RFID tag 64 matches neither the first end BS1 nor the second end BS2 of the band strip 88 in circumferential position. Weight of the reference full band BF is prevented from being rapidly varied at the end 88e of the band strip 88. Effectively suppressed is an impact of the incorporated RFID tag 64 on uniformity. Vibration during high-speed running is effectively suppressed to improve ride comfort of the tire 2. Concentration of strain is suppressed at the end 88e of the band strip 88, so that the tire 2 can also suppress BEL generated from the end 88e of the band strip 88. From this viewpoint, the RFID tag 64 preferably matches neither the first end BS1 nor the second end BS2 of the band strip 88 in circumferential position. From the viewpoint of improving uniformity of the tire 2, the RFID tag 64 is more preferably positioned in a zone other than the overlapped zone LZ, and is further preferably positioned in the zone CZ opposite by 180 degrees to the overlapped zone LZ. The tag member 24 is particularly preferably disposed such that the position CM opposite by 180 degrees to the circumferential center LM of the overlapped zone LZ and the position of the RFID tag 64 circumferentially match each other.

As described above, the band strip 88 is the cord array including the plurality of band cords 84 arrayed. The band cords 84 included in the band strip 88 are preferably not greater than five in number. This suppresses circumferential variation in axial width of the reference full band BF to suppress circumferential variation in holding force and weight. Vibration during high-speed running is effectively suppressed to improve ride comfort of the tire 2. Concentration of strain is suppressed at the end 88e of the band strip 88, so that the tire 2 can also suppress BEL generated from the end 88e of the band strip 88. From this viewpoint, the band cords 84 included in the band strip 88 are more preferably not greater than three in number.

The RFID tag 64 in the tire 2 is preferably positioned radially between the outer end SAG of the outer apex 54 and the end FE of the turned-up portion 62. The RFID tag 64 is thus disposed to be axially overlapped with the outer apex 54. The outer apex 54 suppresses deformation of the RFID tag 64 due to an applied load. The RFID tag 64 is disposed distant from the end FE of the turned-up portion 62 which is likely to have concentration of strain, to also suppress concentration of strain to the RFID tag 64. The tire 2 can suppress an impact of the RFID tag 64 on durability. From this viewpoint, more preferably, the RFID tag 64 is positioned radially between the outer end SAG of the outer apex 54 and the outer end CG of the chafer 8, and further preferably, the tag member 24 is entirely positioned radially between the outer end SAG of the outer apex 54 and the outer end CG of the chafer 8.

As described above, the outer apex 54 can contribute to suppression of deformation of the RFID tag 64 due to an applied load. From the viewpoint that the outer apex 54 can effectively suppress deformation of the RFID tag 64 due to an applied load, the outer apex 54 is preferably higher in stiffness than the sidewalls 6 when the RFID tag 64 is disposed to be axially overlapped with the outer apex 54. Specifically, the complex elastic modulus of the outer apex 54 is more preferably not less than 1.1 times and not greater than 3.0 times the complex elastic modulus of the sidewalls 6.

As shown in FIG. 1, the reference full band BF is positioned radially between the second belt ply 76B and the third belt ply 76C. As described above, the inclination direction of the third belt cords 78C is opposite to the inclination direction of the second belt cords 78B. The reference full band BF of the tire 2 is positioned between the second belt ply 76B and the third belt ply 76C which include the belt cords 78 opposite to each other in direction of inclination.

In the present invention, in the case where the reference full band BF is positioned between the two belt plies including the belt cords reverse to each other in direction of inclination, the belt ply positioned radially inside the reference full band BF is referred to as inner belt ply whereas the belt ply positioned radially outside the reference full band BF is referred to as outer belt ply.

In the tire 2 thus configured, the second belt ply 76B corresponds to the inner belt ply, and the third belt ply 76C corresponds to the outer belt ply.

In the present invention, in a case where the inner belt ply corresponds to the reference belt ply BP, the outer belt ply is referred to as sub reference belt ply BPs. In another case where the outer belt ply corresponds to the reference belt ply BP, the inner belt ply is referred to as sub reference belt ply BPs. The sub reference belt ply BPs is positioned radially next to the reference belt ply BP, and includes the belt cords opposite in direction of inclination to the belt cords in the reference belt ply BP.

In the tire 2 thus configured, the second belt ply 76B as the inner belt ply is the reference belt ply BP, so that the third belt ply 76C as the outer belt ply is the sub reference belt ply BPs.

The reference full band BF of the tire 2 is positioned between the reference belt ply BP and the sub reference belt ply BPs which include the belt cords 78 opposite to each other in direction of inclination. The reinforcing layer 14 including the reference belt ply BP, the sub reference belt ply BPs, and the reference full band BF can effectively contribute to suppression of outer radial growth due to running.

The band cord 84 included in the reference full band BF extends substantially circumferentially and the belt cords 78 included in the sub reference belt ply BPs are disposed to cross the belt cords 78 included in the reference belt ply BP, so as to reduce shearing strain caused at rubber positioned between the band cord 84 and the belt cords 78. The reference full band BF can stably and continuously exhibit a function of suppressing outer radial growth. The tire 2 can suppress an impact of the incorporated RFID tag 64 on durability as well as can improve ride comfort. From this viewpoint, preferably in the at least one belt ply 76 forming the belt 72, the belt ply 76 having the maximum axial width is the reference belt ply BP, and the belt ply 76 positioned radially next to the reference belt ply BP and including the belt cords 78 opposite in direction of inclination to the belt cords 78 in the reference belt ply BP is the sub reference belt ply BPs, and the reference full band BF is positioned radially between the reference belt ply BP and the sub reference belt ply BPs. In this case, more preferably, the reference belt ply BP is positioned radially inside the reference full band BF, and the sub reference belt ply BPs is positioned radially outside the reference full band BF.

The reference full band BF shown in FIG. 6 is formed by spirally winding the band strip 88 from the first end 82e1 to the second end 82e2 counterclockwise when viewed from the second end 82e2. The band cord 84 of the reference full band BF is thus slightly inclined from the circumferential direction. In the reinforcing layer 14 shown in FIG. 6, the band cord 84 included in the reference full band BF is opposite in direction of inclination to the belt cords 78 included in the reference belt ply BP. The band cord 84 included in the reference full band BF may alternatively equal in direction of inclination to the belt cords 78 included in the reference belt ply BP. From the viewpoint of effectively reducing shearing strain caused at rubber positioned between the band cord 84 and the belt cords 78, the band cord 84 included in the reference full band BF is preferably opposite in direction of inclination to the belt cords 78 included in the reference belt ply BP.

FIG. 10 shows a section of the center circumferential groove 34. The section of the center circumferential groove 34 shown in FIG. 10 is along a plane perpendicular to a length direction of the center circumferential groove 34.

The center circumferential groove 34 has a pair of wall surfaces 34S including a groove opening 34M, and a bottom surface 34B including a groove bottom 34T. A dash-dotted line LC indicates a center line of the center circumferential groove 34. The center circumferential groove 34 has a sectional shape symmetric with respect to the center line LC. The center line LC extends in a depth direction of the center circumferential groove 34 and passes through the groove bottom 34T.

The center circumferential groove 34 of the tire 2 has a small groove width and includes the pair of wall surfaces 34S that can come into contact with each other when the tread 4 comes into contact with a road surface to be deformed (hereinafter, circumferential narrow groove HG). As described above, in the plurality of circumferential grooves 30 of the tread 4 of the tire 2, two circumferential grooves 30 positioned axially outermost are the shoulder circumferential grooves 32 each corresponding to the circumferential main groove MG. The center circumferential groove 34 is positioned between the two shoulder circumferential grooves 32. The two circumferential main grooves MG interpose the circumferential

groove 30 corresponding to the circumferential narrow groove HG. The plurality of circumferential grooves 30 formed in the tread 4 of the tire 2 include two circumferential main grooves MG positioned axially outermost and at least one circumferential narrow groove HG positioned between two circumferential main grooves MG. The tread 4 of the tire 2 includes two circumferential narrow grooves HG.

Two circumferential narrow groove HG includes a body portion 90 and an enlarged width portion 92, respectively. The body portion 90 includes the groove opening 34M of the circumferential narrow groove HG. The enlarged width portion 92 includes the groove bottom 34T of the circumferential narrow groove HG. The enlarged width portion 92 is exposed after the tread 4 wears and the body portion 90 disappears. FIG. 10 includes a double-pointed arrow WC1 indicating a length as a minimum groove width of the circumferential narrow groove HG, and a double-pointed arrow WC2 indicating a length as a maximum groove width of the circumferential narrow groove HG. The circumferential narrow groove HG has the minimum groove width WC1 in the body portion 90 and the maximum groove width WC2 in the enlarged width portion 92.

The body portion 90 includes a narrow groove portion 94. The narrow groove portion 94 of the tire 2 extends in a depth direction of the circumferential narrow groove HG from the groove opening 34M of the circumferential narrow groove HG. The narrow groove portion 94 includes the groove opening 34M of the circumferential narrow groove HG. The body portion 90 has the minimum groove width WC1 in the narrow groove portion 94. The minimum groove width WC1 is set such that the pair of wall surfaces 34S of the circumferential narrow groove HG come into contact with each other in the narrow groove portion 94 when the tread 4 comes into contact with a road surface to be deformed.

The narrow groove portion 94 includes a portion extending straight in the depth direction (hereinafter, also referred to as straight portion 96). The straight portion 96 is included in the narrow groove portion 94 and has the groove width WC1 constant in the depth direction. The narrow groove portion 94 includes the straight portion 96 having the groove width WC1 constant in the depth direction. Though not shown, the narrow groove portion 94 may exemplarily be formed to be gradually increased in groove width from the position having the minimum groove width WC1 toward each of the groove opening 34M and the enlarged width portion 92.

The enlarged width portion 92 is positioned radially inside the body portion 90. The enlarged width portion 92 is larger in groove width than the body portion 90. The enlarged width portion 92 has the maximum groove width WC2 at a position PX (hereinafter, maximum groove width position). The enlarged width portion 92 is tapered outward from the maximum groove width position PX and is tapered inward from the maximum groove width position PX.

FIG. 10 includes a position indicated by a solid line LPE as a boundary between the body portion 90 (specifically the narrow groove portion 94) and the enlarged width portion 92. The boundary LPE is represented as a position where the circumferential narrow groove HG has a width Wb that is 1.1 times the minimum groove width WC1 of the narrow groove portion 94. If a portion having the width Wb that is 1.1 times the minimum groove width WC1 has a certain length, the boundary LPE corresponds to a radially outer end of the portion.

The enlarged width portion 92 of the tire 2 includes an inflection portion 98 and a bottom portion 100. The enlarged width portion 92 has the maximum groove width WC2 in the bottom portion 100. FIG. 10 includes a position H4 indicating a boundary between the inflection portion 98 and the bottom portion 100.

The inflection portion 98 connects between the narrow groove portion 94 and the bottom portion 100. The inflection portion 98 has a groove width gradually increased from the boundary LPE with the narrow groove portion 94 toward the boundary H4 with bottom portion 100. The inflection portion 98 is curved to be depressed inward from outside thereof. Specifically, in a section of the circumferential narrow groove HG, the inflection portion 98 has a contour indicated by an arc. FIG. 10 includes an arrow RC1 indicating a radius of the arc as the contour of the inflection portion 98. The arc indicating the contour of the inflection portion 98 and a straight line indicating a contour of the straight portion 96 are in contact with each other on a boundary H3 between the inflection portion 98 and the straight portion 96.

The bottom portion 100 is positioned radially inside the inflection portion 98. The bottom portion 100 includes the groove bottom 34T of the circumferential narrow groove HG. The bottom portion 100 of the tire 2 has a contour indicated by a single arc having a radius Rw in the section of the circumferential narrow groove HG shown in FIG. 10. The arc indicating the contour of the bottom portion 100 has a center positioned on the center line LC of the circumferential narrow groove HG. The radius Rw of the arc indicating the contour of the bottom portion 100 is a half of the maximum groove width WC2 of the enlarged width portion 92. The arc indicating the contour of the bottom portion 100 is in contact with the arc indicating the contour of the inflection portion 98 on the boundary H4.

FIG. 10 includes a double-pointed arrow D1 indicating a length as a groove depth of the circumferential narrow groove HG. A double-pointed arrow D2 indicates a length as a groove depth of the body portion 90 of the circumferential narrow groove HG. The groove depth D2 is represented as a distance in the depth direction from the groove opening 34M of the circumferential narrow groove HG to the boundary LPE. A double-pointed arrow D3 indicates a length as a groove depth from the groove opening 34M of the circumferential narrow groove HG to the position PX where the enlarged width portion 92 has the maximum groove width WC2.

The groove depth D1 of the circumferential narrow groove HG of the tire 2 is equal to the groove depth DGs of the shoulder circumferential groove 32, in other words, the circumferential main groove MG, or the circumferential narrow groove HG is shallower than the circumferential main groove MG. Specifically, a ratio D1/DGs of the groove depth D1 of the

circumferential narrow groove HG to the groove depth DGs of the circumferential main groove MG is not less than 0.75 and not greater than 1.00.

As described above, the center circumferential groove 34 of the tire 2 is the circumferential narrow groove HG. When the tread 4 comes into contact with a road surface to be deformed, the pair of wall surfaces 34S of the circumferential narrow groove HG come into contact with each other in the narrow groove portion 94. The land portions 36 positioned on both sides of the circumferential narrow groove HG support each other to suppress deformation of the tread 4. Although the tread 4 is soft (specifically, the cap portion 46 is soft), the tire 2 can be increased in apparent stiffness of the tread 4. This suppresses abrasion, and the tire 2 can thus be improved in wear resistance. From this viewpoint, the plurality of circumferential grooves 30 preferably further includes the at least one circumferential narrow groove HG positioned between the two circumferential main grooves MG. In this case, preferably, the circumferential narrow groove HG includes the body portion 90 having the groove opening 34M, and the enlarged width portion 92 having the groove bottom 34T, the body portion 90 includes the narrow groove portion 94, and the pair of wall surfaces 34S of the circumferential narrow groove HG come into contact with each other in the narrow groove portion 94 when the tread 4 comes into contact with a road surface to be deformed.

When the tread 4 wears, the circumferential narrow groove HG disappears gradually. The enlarged width portion 92 is exposed after the narrow groove portion 94 disappears. In the circumferential narrow groove HG, the maximum groove width WC2 of the enlarged width portion 92 is larger than the minimum groove width WC1 of the narrow groove portion 94. The enlarged width portion 92, which is exposed at or after a middle stage of wear causing disappearance of the narrow groove portion 94 due to wear of the tread 4, can contribute to suppression of deterioration in wet performance. The tire 2 can maintain excellent wear resistance while improving ride comfort, and can also suppress deterioration in wet performance due to wear. From this viewpoint, the maximum groove width WC2 of the enlarged width portion 92 is preferably larger than the minimum groove width WC1 of the narrow groove portion 94. In this case, from the viewpoint of maintaining excellent wet performance, the maximum groove width WC2 of the enlarged width portion 92 is preferably not less than twice the minimum groove width WC1 of the narrow groove portion 94, and is more preferably not less than three times. From the viewpoint that an impact is suppressed on stiffness of the crown portion of the tread 4 and the tire 2 can maintain excellent uneven wear resistance, the maximum groove width WC2 of the enlarged width portion 92 is preferably not greater than eight times the minimum groove width WC1 of the narrow groove portion 94, and is more preferably not greater than seven times.

The minimum groove width WC1 of the narrow groove portion 94 is preferably not greater than 2.5 mm. When the tread 4 comes into contact with a road surface to be deformed, the pair of wall surfaces 34S of the circumferential narrow groove HG can effectively come into contact with each other in the narrow groove portion 94. This suppresses deformation of the tread 4, and the tire 2 can thus be improved in wear resistance. The minimum groove width WC1 is more preferably not greater than 2.0 mm from this viewpoint. From the viewpoint that water having entered between the tread 4 and a wet road surface is effectively discharged via the circumferential narrow groove HG, the minimum groove width WC1 is preferably not less than 1.0 mm.

In the tire 2, the radius RC1 of the arc indicating the contour of the inflection portion 98 is larger than the radius Rw of the arc indicating the contour of the bottom portion 100. The circumferential narrow groove HG can thus sufficiently exhibit its function. From this viewpoint, a ratio RC1/Rw of the radius RC1 to the radius Rw is preferably not less than 1.5 and not greater than 20.

The ratio RC1/Rw set to be not less than 1.5 can suppress uneven wear due to a rapid change in the stiffness of the tire 2. The ratio RC1/Rw is more preferably not less than 2.0 from this viewpoint.

The ratio RC1/Rw set to be not greater than 20 can suppress deterioration in the wet performance of the tire 2. The ratio RC1/Rw is more preferably not greater than 15 from this viewpoint.

A ratio D2/D 1 of the groove depth D2 of the body portion 90 to the groove depth D1 of the circumferential narrow groove HG is preferably not less than 0.25 and not greater than 0.70.

The ratio D2/D1 set to be not less than 0.25 can appropriately maintain the groove depth D2 of the body portion 90. When the tread 4 comes into contact with a road surface to be deformed, the pair of wall surfaces 34S of the circumferential narrow groove HG can sufficiently come into contact with each other in the narrow groove portion 94. The tire 2 can be improved in wear resistance. The ratio D2/D1 is more preferably not less than 0.30 from this viewpoint.

The ratio D2/D1 set to be not greater than 0.70 allows the tire 2 to include the enlarged width portion 92 having necessary groove volume. The enlarged width portion 92 thus exposed can effectively contribute to suppressing deterioration in wet performance. The ratio D2/D1 is more preferably not greater than 0.65 from this viewpoint.

From the viewpoint that the enlarged width portion 92 can effectively contribute to suppression of deterioration in wet performance, a ratio D3/D 1 of the groove depth D3 from the groove opening 34M of the circumferential narrow groove HG to the position PX where the enlarged width portion 92 has the maximum groove width WC2 to the groove depth D1 of the circumferential narrow groove HG is preferably not less than 0.75 and not greater than 0.95.

As shown in FIG. 11, the circumferential narrow groove HG includes a portion at the groove opening 34M which may be processed to be tapered. In this case, the body portion 90 of the circumferential narrow groove HG includes a

funnel portion 102 disposed radially outside the narrow groove portion 94.

The funnel portion 102 can contribute to an increase in the groove volume of the circumferential narrow groove HG, and can effectively suppress concentration of strain to edges of the land portions 36 positioned on both sides of the circumferential narrow groove HG. From this viewpoint, preferably, the body portion 90 of the circumferential narrow groove HG includes the funnel portion 102 including the groove opening 34M of the circumferential narrow groove HG, and the funnel portion 102 is disposed radially outside the narrow groove portion 94. In this case, the funnel portion 102 and the narrow groove portion 94 have a boundary LTP therebetween represented as a position where the circumferential narrow groove HG has a width Wa that is 1.1 times the minimum groove width WC1 of the narrow groove portion 94 in a boundary portion between the funnel portion 102 and the narrow groove portion 94.

The funnel portion 102 has a groove width WA that is preferably not less than 0.15 times and not greater than 0.45 times the groove width WGs of the circumferential main groove MG.

A ratio D4/D 1 of a groove depth D4 of the funnel portion 102 to the groove depth D1 of the circumferential narrow groove HG is preferably not less than 0.12 and not greater than 0.14.

As apparent from the above, the present invention provides the heavy duty tire 2 that can suppress an impact of an incorporated RFID tag on durability as well as can improve ride comfort.

EXAMPLES

The following will describe the present invention in more detail by means of examples and the like, although the present invention is not limited to these examples.

Various chemicals used in Examples and Comparative Examples are described below.

NR: TSR20
SBR: EUROPRENE (registered trademark) SOL R C2525 (Tg: -50°C, styrene amount: 26% by mass, vinyl amount: 24% by mole, Mw: six hundred thousand, non-oil extended product) manufactured by Versalis S.p.A.
BR: UBEPOL BR (registered trademark) 150B (cis amount: 97% by mole) manufactured by Ube Industries, Ltd.
Carbon black: DIABLACK N134 ($N_2SA$: 148 $m^2/g$) manufactured by Mitsubishi Chemical Corporation
Silica: ULTRASIL 9100GR ($N_2SA$: 230 $m^2/g$, average primary particle diameter: 15 nm) manufactured by Evonik Degussa GmbH
Silane coupling agent: NXT ([3-(Octanoylthio)propyl]triethoxysilane) manufactured by Momentive Performance Materials Inc.
Resin component: Oppera PR-383 (hydrogenated DCPD/C9 resin, resin containing dicyclopentadiene, styrene, and indene as monomer components, softening point: 103°C) manufactured by Exxon Mobil Corporation
Wax: OZOACE-0355 manufactured by NIPPON SEIRO CO., LTD.
Antioxidant 1: NOCRAC 6C (N-(1,3-dimethylbutyl)-N'-phenyl-p-phenylenediamine) manufactured by OUCHI SHINKO CHEMICAL INDUSTRIAL CO., LTD.
Antioxidant 2: NOCRAC RD (poly(2,2,4-trimethyl-1,2-dihydroquinoline)) manufactured by OUCHI SHINKO CHEMICAL INDUSTRIAL CO., LTD.
Stearic acid: bead stearic acid, Tsubaki, manufactured by NOF Corporation
Zinc oxide: Zinc Oxide Type-1 manufactured by Mitsui Mining & Smelting Co., Ltd.
Sulfur: HK-200-5 (powdery sulfur containing 5% of oil) manufactured by Hosoi Chemical Industry Co., Ltd.
Vulcanization accelerator: NOCCELER NS (N-t-butyl-2-benzothiazole sulfenamide) manufactured by OUCHI SHINKO CHEMICAL INDUSTRIAL CO., LTD.

[Examples and Comparative Examples]

In accordance with each blending formula shown in Table 1, materials other than sulfur and a vulcanization accelerator are kneaded under a condition of 150°C for 5 minutes by using a 1.7-L Banbury mixer manufactured by Kobe Steel, Ltd., to obtain a kneaded product. Next, the sulfur and the vulcanization accelerator are added to the obtained kneaded product, and the mixture is kneaded under a condition of 80°C for 5 minutes by using an open roll, to obtain a rubber composition (uncrosslinked rubber composition). The obtained rubber composition is molded into a tread and attached together with other parts such as sidewalls to form an unvulcanized tire. The unvulcanized tire is press-vulcanized under a condition of 150°C for 12 minutes to produce a test tire (size: 315/70R22.5, tire for trucks and buses) having a basic configuration shown in FIG. 1. The test tire includes an RFID tag as indicated by "Y" in the cells for "RFID tag" in Table 1 below. The test tire includes a reference full band including a band cord made of steel as indicated by "Y" in the cells for "S-JLB" in Table 1 below.

[Ride Comfort]

The test tire is mounted to each wheel of a 2-D test vehicle with a fixed load capacity 10 tons with a rim (8.25×22.5) at an internal pressure (900 kPa). Ride comfort during running on a tire test course is represented as indexes of driver sensory evaluation assuming that the index of Comparative Example 1 is 100. The results are shown in the cells for "Ride comfort" in Table 1 below. The larger the value is, the better the ride comfort is.

[Table 1]

Table 1

| | Example 1 | Example 2 | Example 3 | Comparative Example 1 | Comparative Example 2 | Comparative Example 3 |
|---|---|---|---|---|---|---|
| Blending | | | | | | |
| NR | 70 | 70 | 70 | 70 | 70 | 70 |
| SBR | - | 10 | 20 | 25 | 15 | 20 |
| BR | 30 | 20 | 10 | 5 | 15 | 10 |
| CB | 15 | 20 | 25 | 35 | 30 | 25 |
| Silica | 30 | 30 | 30 | 30 | 30 | 30 |
| Coupling agent | 3 | 3 | 3 | 3 | 3 | 3 |
| Resin | 3 | 3 | 3 | 3 | 3 | 3 |
| Wax | 1.5 | 1.5 | 1.5 | 1.5 | 1.5 | 1.5 |
| Antioxidant 1 | 1 | 1 | 1 | 1 | 1 | 1 |
| Antioxidant 2 | 1 | 1 | 1 | 1 | 1 | 1 |
| Stearic acid | 3 | 3 | 3 | 3 | 3 | 3 |
| Zinc oxide | 3 | 3 | 3 | 3 | 3 | 3 |
| Sulfur | 1.5 | 1.5 | 1.5 | 1.5 | 1.5 | 1.5 |
| Vulcanization accelerator | 2 | 2 | 2 | 2 | 2 | 2 |
| CBR/BCB | 2.00 | 1.00 | 0.40 | 0.14 | 0.50 | 0.40 |
| RFID tag | Y | Y | Y | Y | Y | Y |
| S-JLB | Y | Y | Y | Y | Y | Y |
| Wj/Wt | 0.75 | 0.75 | 0.75 | 0.75 | 0.75 | 0.95 |
| (CBR/BCB)/(Wj/Wt) | 2.67 | 1.33 | 0.53 | 0.19 | 0.67 | 0.42 |
| Ride comfort | 150 | 140 | 130 | 100 | 110 | 110 |

## INDUSTRIAL APPLICABILITY

The above described technique of suppressing an impact of an incorporated RFID tag on durability as well as improving ride comfort is applicable to various tires.

## REFERENCE SIGNS LIST

| | |
|---|---|
| 2 | tire |
| 4 | tread |

| | |
|---|---|
| 6 | sidewall |
| 10 | bead |
| 12 | carcass |
| 14 | reinforcing layer |
| 24 | tag member |
| 26 | tread surface |
| 30, HG, MG | circumferential groove |
| 36 | land portion |
| 44 | base portion |
| 46 | cap portion |
| 48 | core |
| 50 | apex |
| 52 | inner apex |
| 54 | outer apex |
| 58 | carcass ply |
| 60 | ply body |
| 62 | turned-up portion |
| 64 | RFID tag |
| 66 | protector |
| 72 | belt |
| 74 | band |
| 76, 76A, 76B, 76C, 76D, BP | belt ply |
| 78 | belt cord |
| 82, | BF full band |
| 84 | band cord |
| 88 | band strip |
| 90 | body portion |
| 92 | enlarged width portion |
| 94 | narrow groove portion |

## Claims

1. A heavy duty tire comprising: a pair of beads; a carcass extending between the pair of beads; a tread positioned outside the carcass and configured to come into contact with a road surface; a reinforcing layer positioned radially between the tread and the carcass; and a tag member including an RFID tag, wherein

    the carcass includes a carcass ply,
    the carcass ply includes a ply body extending between the pair of beads, and a pair of turned-up portions connected to with the ply body and turned up at the beads,
    the tread is formed from a rubber composition containing a rubber component including a butadiene rubber, and a filler including carbon black and silica,
    the reinforcing layer includes a belt having a large number of belt cords arranged parallelly, and a band having a band cord spirally wound,
    the belt includes at least one belt ply,
    the band includes at least one full band composed of helically wound band strip,
    a full band having a largest axial width among the at least one full band is a reference full band,
    a material of the band cord in the reference full band is steel,
    the RFID tag is positioned radially between an end of one of the turned-up portions and a maximum width position of the tire,
    an amount CBR of the butadiene rubber in 100 parts by mass of the rubber component is not less than 10 parts by mass,
    an amount BCB of the carbon black per 100 parts by mass of the rubber component is less than an amount BSi of the silica per 100 parts by mass of the rubber component, and
    the amount CBR of the butadiene rubber, the amount BCB of the carbon black, and a ratio (Wj/Wt) of an axial width Wj of the reference full band to an axial width Wt of the tread satisfy a following relational expression,

    $$(CBR/BCB)/(Wj/Wt) \geq 0.45$$

    preferably, the ratio (CBR/BCB) /(Wj/Wt) in the relational expression satisfies a following relational expression.

    $$(CBR/BCB)/(Wj/Wt) \geq 0.53$$

2. The heavy duty tire according to claim 1, wherein the ratio (Wj/Wt) of the axial width Wj of the reference full band to the axial width Wt of the tread is not less than 0.60 and not greater than 0.90.

3. The heavy duty tire according to claim 1 or 2, wherein

    the tread includes a plurality of circumferential grooves,
    the plurality of circumferential grooves includes two circumferential main grooves positioned axially outermost,
    the two circumferential main grooves each include a pair of wall surfaces configured not to come into contact with each other even when the tread comes into contact with a road surface to be deformed, and
    the reference full band includes ends positioned axially outside the circumferential main grooves.

4. The heavy duty tire according to claim 3, wherein

    the plurality of circumferential grooves further includes at least one circumferential narrow groove positioned between the two circumferential main grooves,
    the circumferential narrow groove includes a body portion having a groove opening of the circumferential narrow groove, and an enlarged width portion having a groove bottom of the circumferential narrow groove,
    the body portion includes a narrow groove portion, the enlarged width portion has a maximum groove width larger than a minimum groove width of the narrow groove portion, and
    the circumferential narrow groove includes a pair of wall surfaces configured to come into contact with each other in the narrow groove portion when the tread comes into contact with a road surface to be deformed.

5. The heavy duty tire according to any one of claims 1 to 4, wherein

    in a state where the tire is viewed axially from a side surface thereof, the band strip forming the reference full band

includes a first portion including a first end and a second portion including a second end overlapped with each other, and
a central angle of a zone where the first portion and the second portion are overlapped with each other is not greater than 150 degrees.

**6.** The heavy duty tire according to any one of claims 1 to 5, wherein the RFID tag does not match a first end and a second end of the band strip in circumferential position.

**7.** The heavy duty tire according to any one of claims 1 to 6, wherein

each of the pair of beads includes a core and an apex,
the apex includes an inner apex positioned radially outside the core and an outer apex positioned radially outside the inner apex, and
the RFID tag is positioned radially between an outer end of the outer apex and the end of one of the turned-up portions.

**8.** The heavy duty tire according to any one of claims 1 to 7, wherein the filler includes silica having an average primary particle diameter not greater than 16 nm.

**9.** The heavy duty tire according to any one of claims 1 to 8, wherein the filler includes carbon black having an average primary particle diameter not greater than 19 nm.

**10.** The heavy duty tire according to any one of claims 1 to 9, wherein

the rubber composition further contains a silane coupling agent, and
the silane coupling agent includes a mercapto-based silane coupling agent.

**11.** The heavy duty tire according to any one of claims 1 to 10, wherein the rubber composition further contains a resin component.

**12.** The heavy duty tire according to any one of claims 1 to 11, wherein

the band strip is a cord array including a plurality of the band cords arrayed, and
the band cords included in the band strip are not greater than five in number.

**13.** The heavy duty tire according to any one of claims 1 to 12, wherein
a ratio BCB/BSi of the amount BCB of the carbon black to the amount BSi of the silica is not less than 1/10 and not greater than 5/6.

**14.** The heavy duty tire according to any one of claims 1 to 13, wherein

the rubber component further includes a natural rubber and a styrene butadiene rubber,
an amount CNR of the natural rubber in 100 parts by mass of the rubber component is larger than the sum of an amount CSBR of the styrene butadiene rubber in 100 parts by mass of the rubber component and the amount CBR of the butadiene rubber.

**15.** The heavy duty tire according to any one of claims 1 to 14, wherein

the ratio (CBR/BCB) /(Wj/Wt) in the relational expression satisfies a following relational expression,

$$(CBR/BCB)/(Wj/Wt) \leq 7.00$$

preferably, the ratio (CBR/BCB) /(Wj/Wt) in the relational expression satisfies a following relational expression.

$$(CBR/BCB)/(Wj/Wt) \leq 3.50$$

FIG. 1

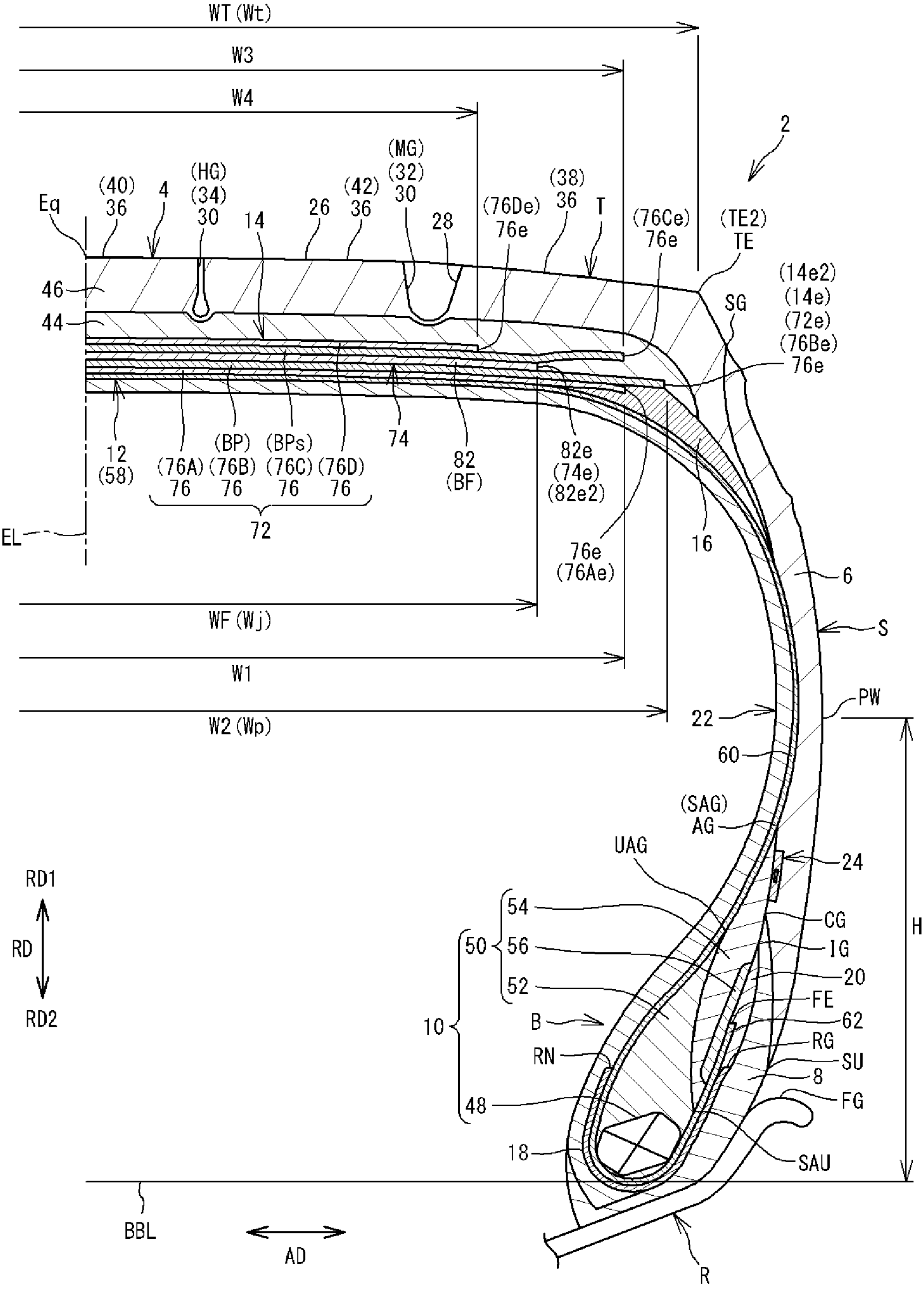
WT (Wt)
W3
W4
2
(MG)
(32)
30
(HG)
(34)
30
(40)
36
4
14
26
(42)
36
28
(76De)
76e
(38)
36
T
(76Ce)
76e
(TE2)
TE
Eq
46
44
SG
(14e2)
(14e)
(72e)
(76Be)
76e
12
(58)
(76A)
76
(BP)
(76B)
76
(BPs)
(76C)
76
(76D)
76
74
82
(BF)
82e
(74e)
(82e2)
72
EL
76e
(76Ae)
16
6
S
WF (Wj)
W1
W2 (Wp)
22
PW
60
(SAG)
AG
UAG
24
54
CG
50
56
IG
20
52
FE
62
10
B
RG
RN
SU
8
48
FG
18
SAU
H
RD1
RD
RD2
BBL
AD
R

FIG. 2

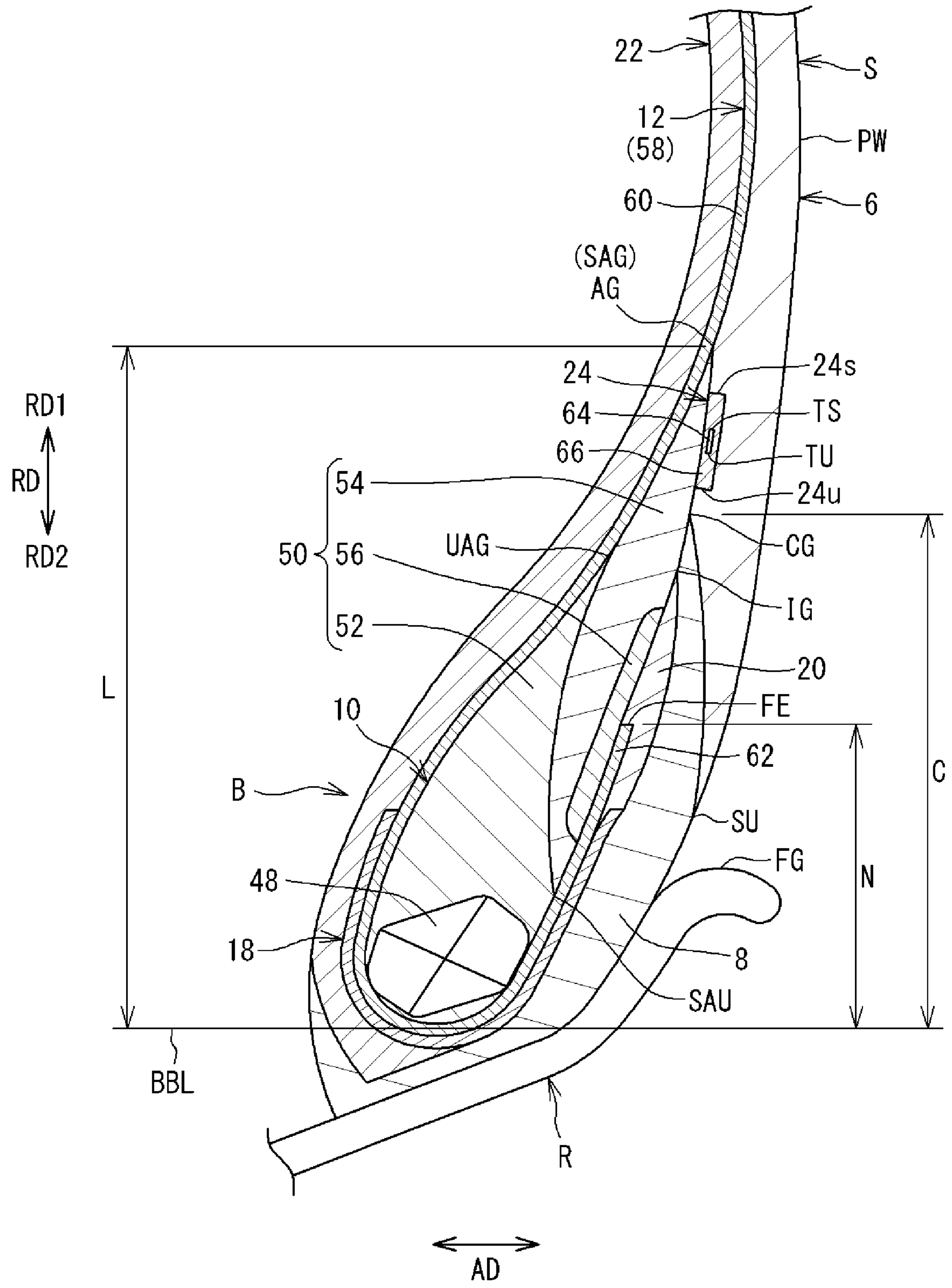
22
12
(58)
60
(SAG)
AG
24
64
66
54
50
56
52
10
B
48
18
RD1
RD
RD2
L
UAG
S
PW
6
24s
TS
TU
24u
CG
IG
20
FE
62
SU
FG
8
SAU
C
N
BBL
R
AD

FIG. 3

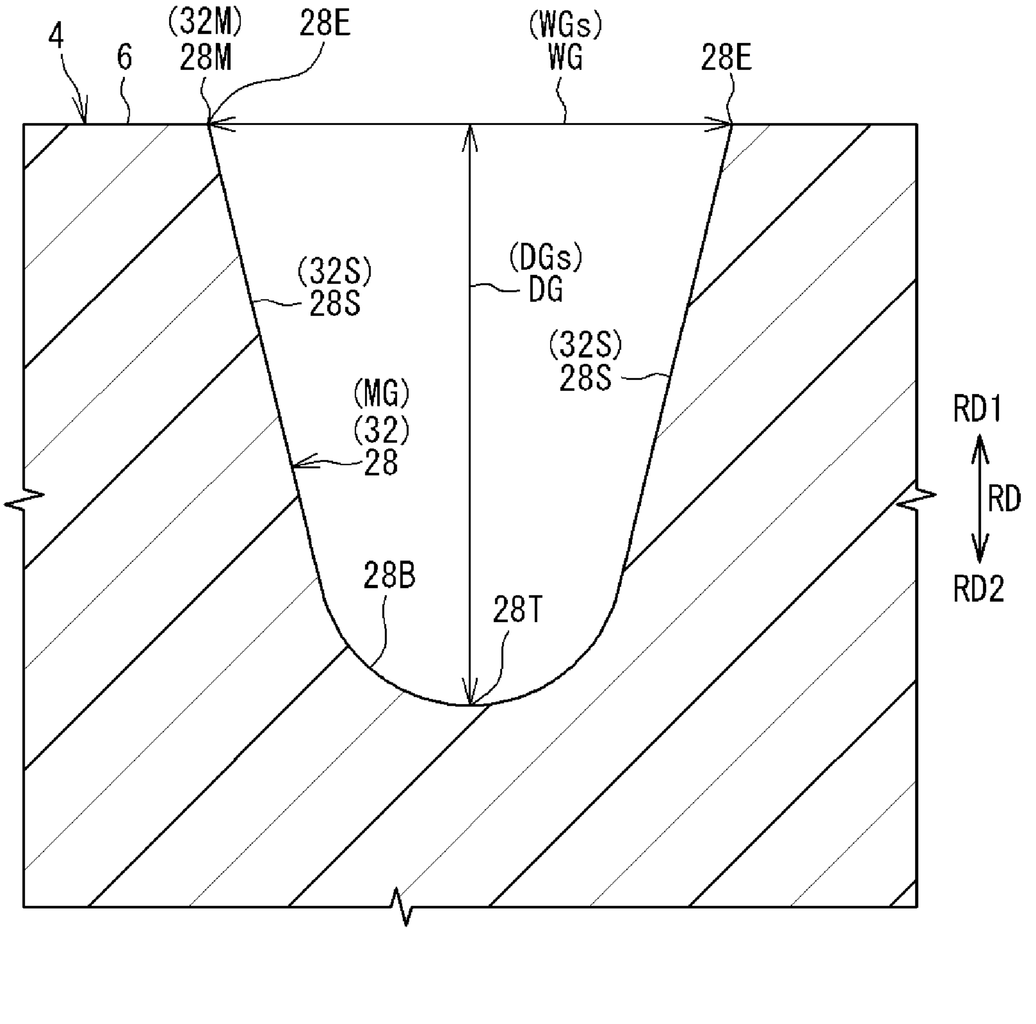
4
6
(32M)
28M
28E
(WGs)
WG
28E
(32S)
28S
(DGs)
DG
(32S)
28S
(MG)
(32)
28
28B
28T
RD1
RD
RD2

FIG. 4

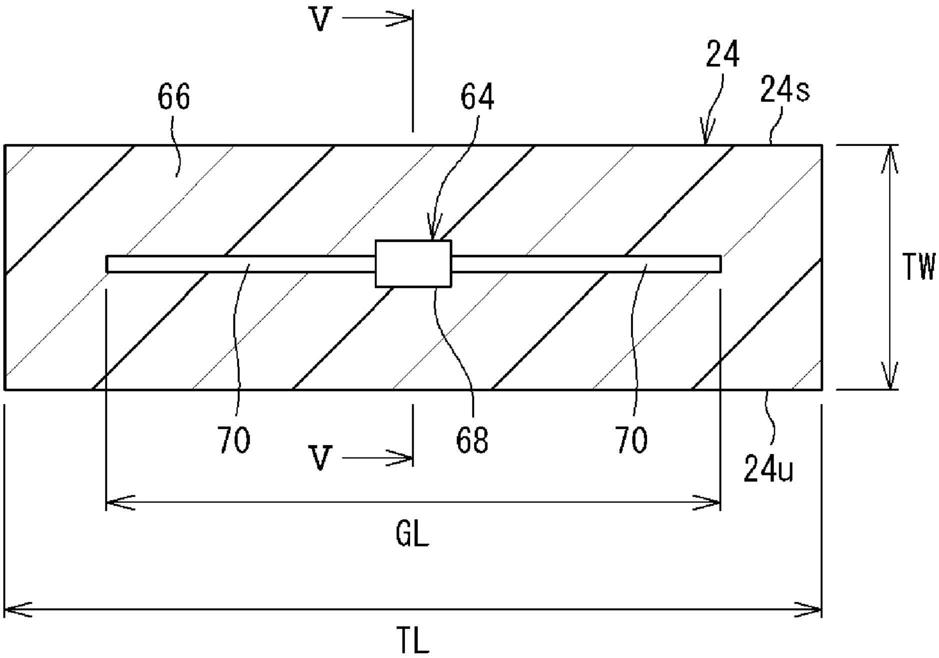

FIG. 5

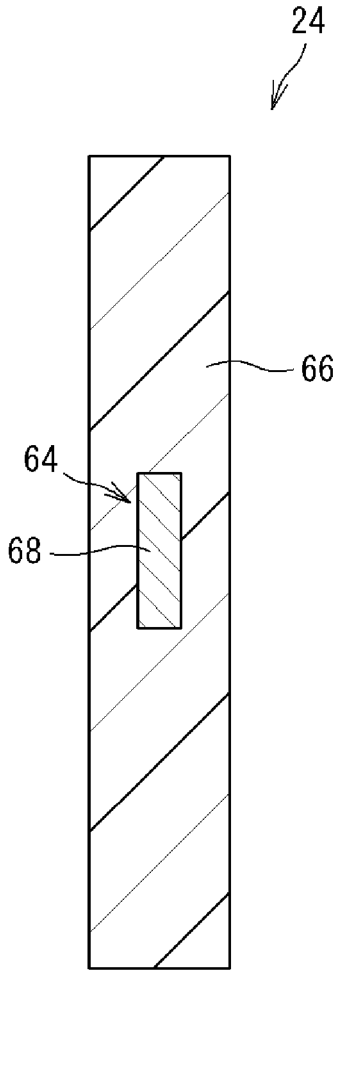

FIG. 6

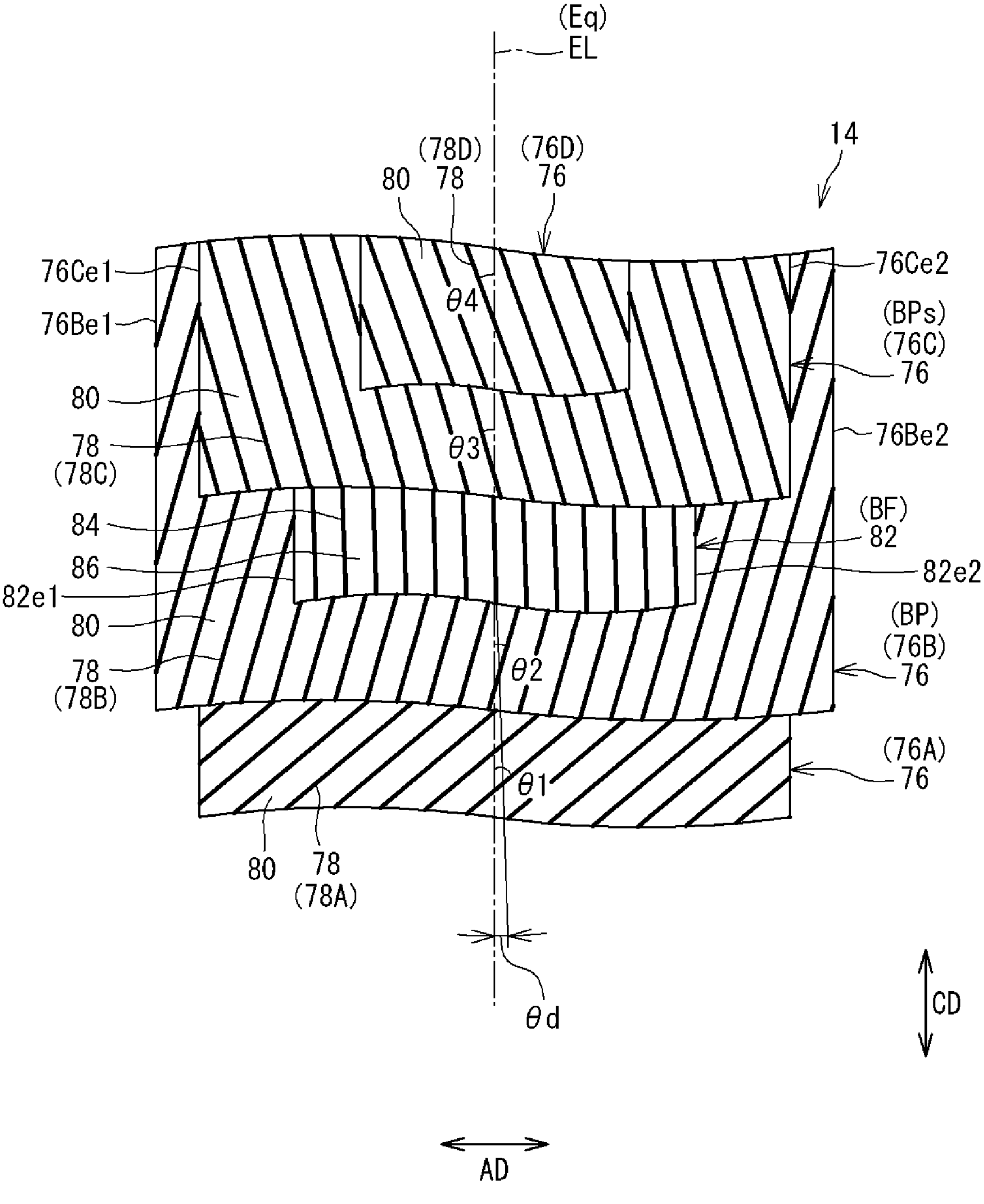
(Eq)
EL
14
80
(78D)
78
(76D)
76
76Ce1
76Be1
θ4
76Ce2
(BPs)
(76C)
76
80
78
(78C)
θ3
76Be2
84
86
82e1
80
78
(78B)
(BF)
82
82e2
(BP)
(76B)
76
θ2
(76A)
76
θ1
80
78
(78A)
θd
CD
AD

FIG. 7

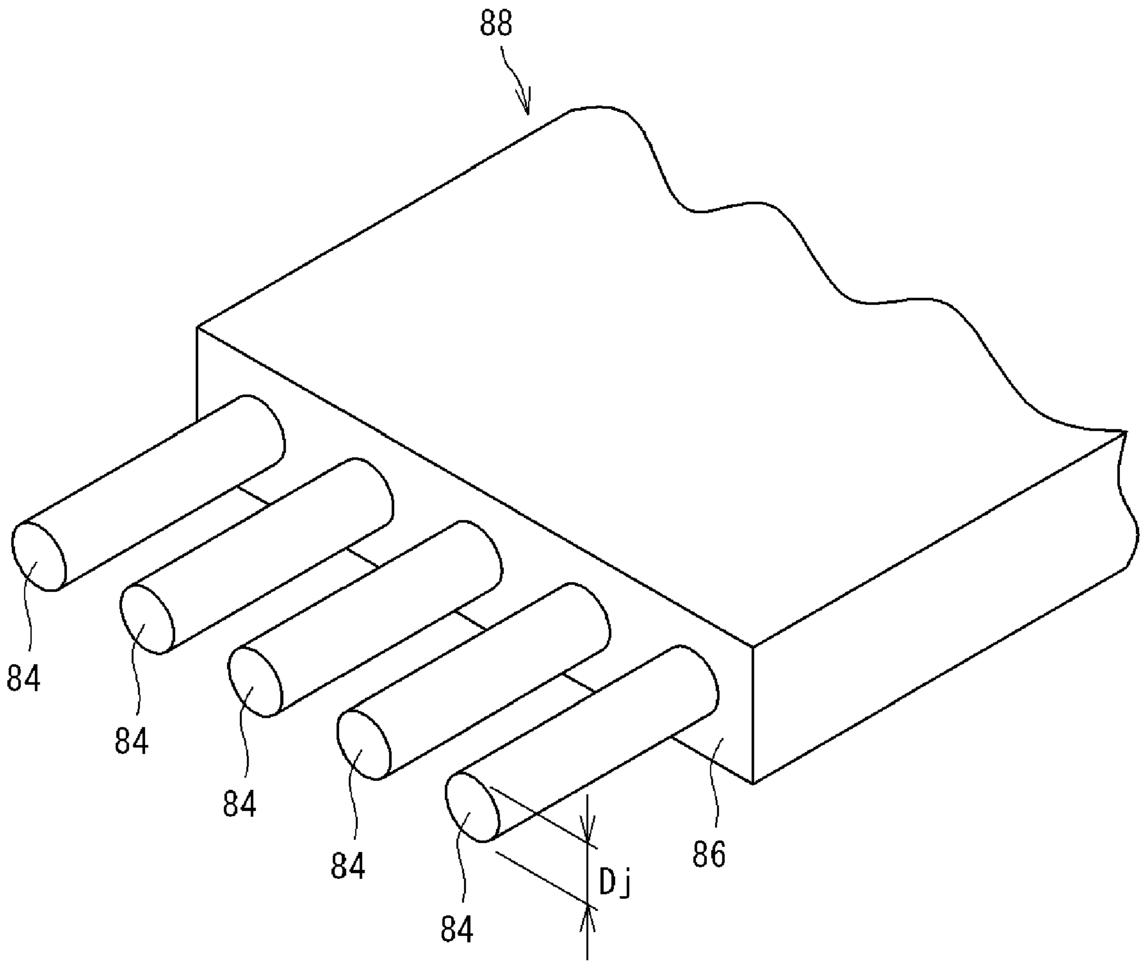

FIG. 8

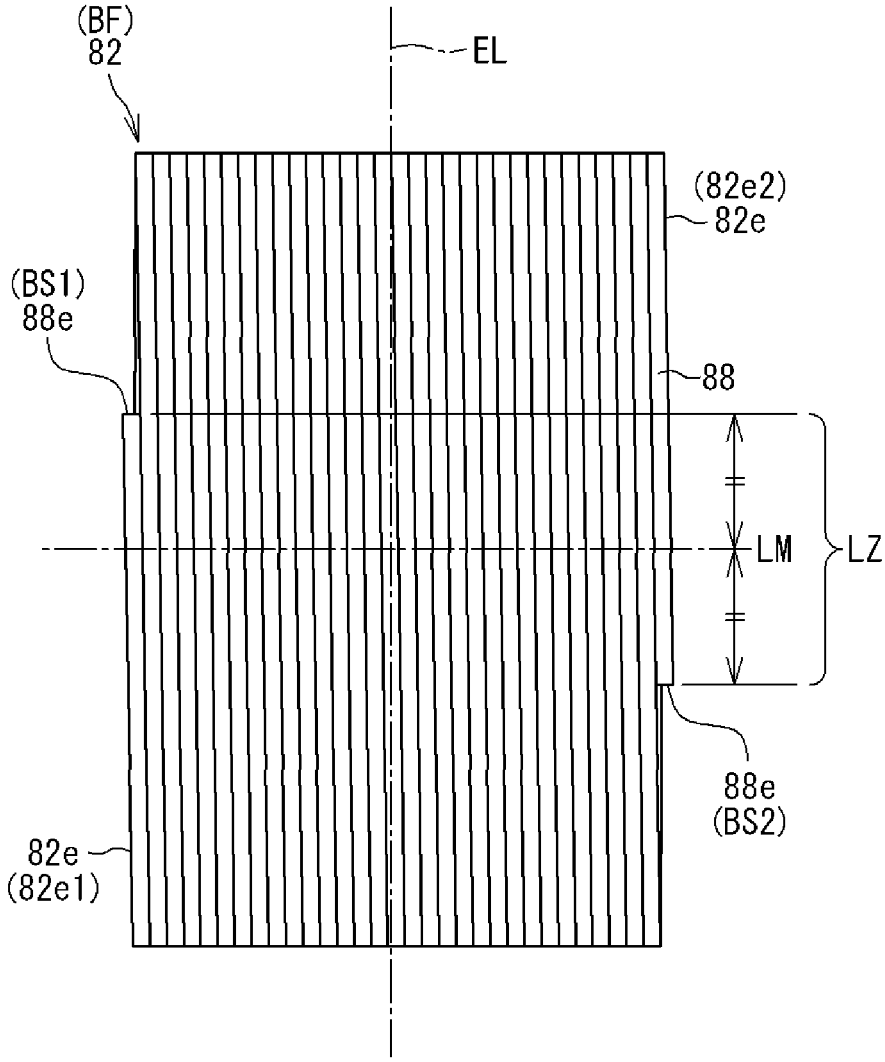

FIG. 9

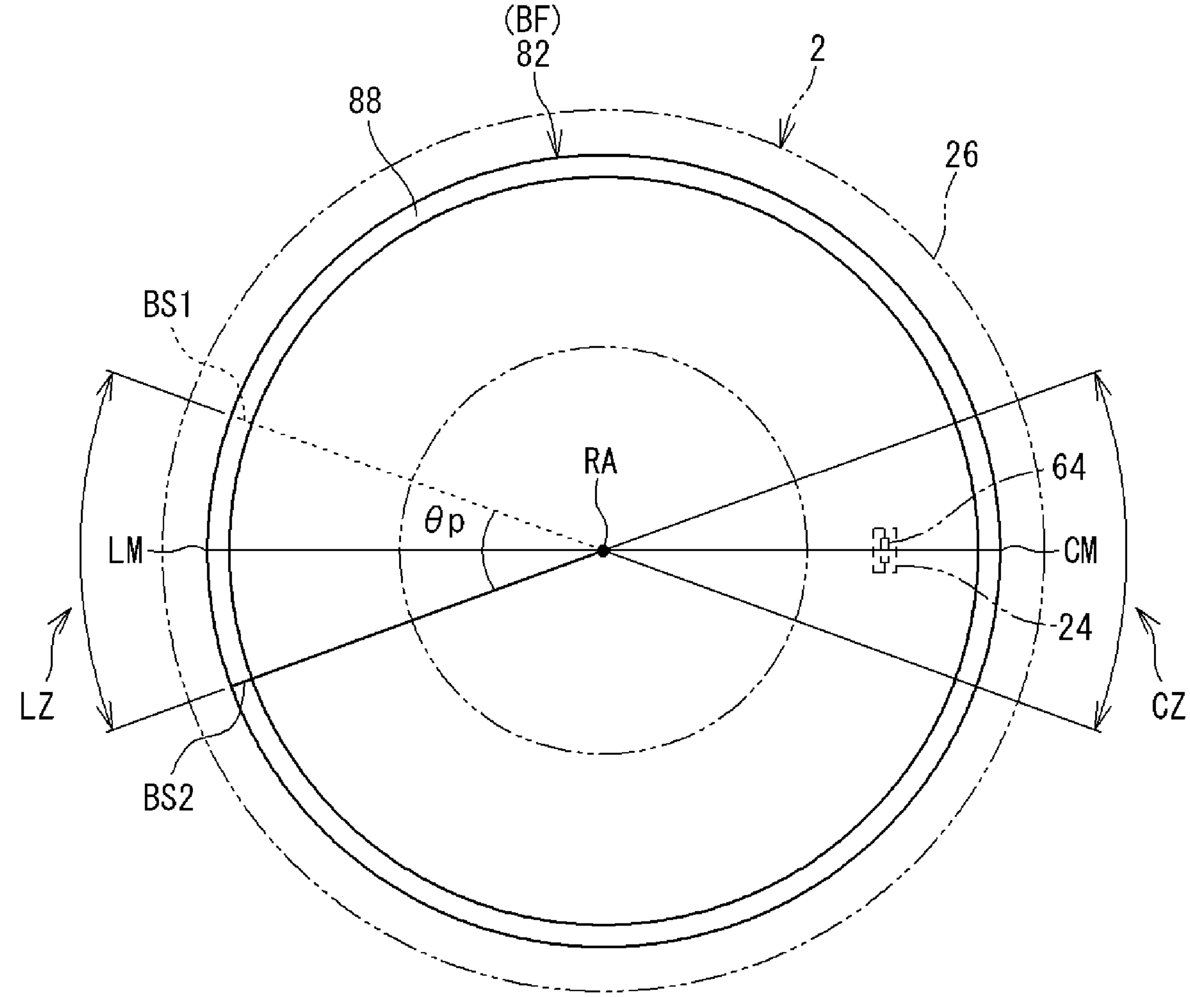

FIG. 10

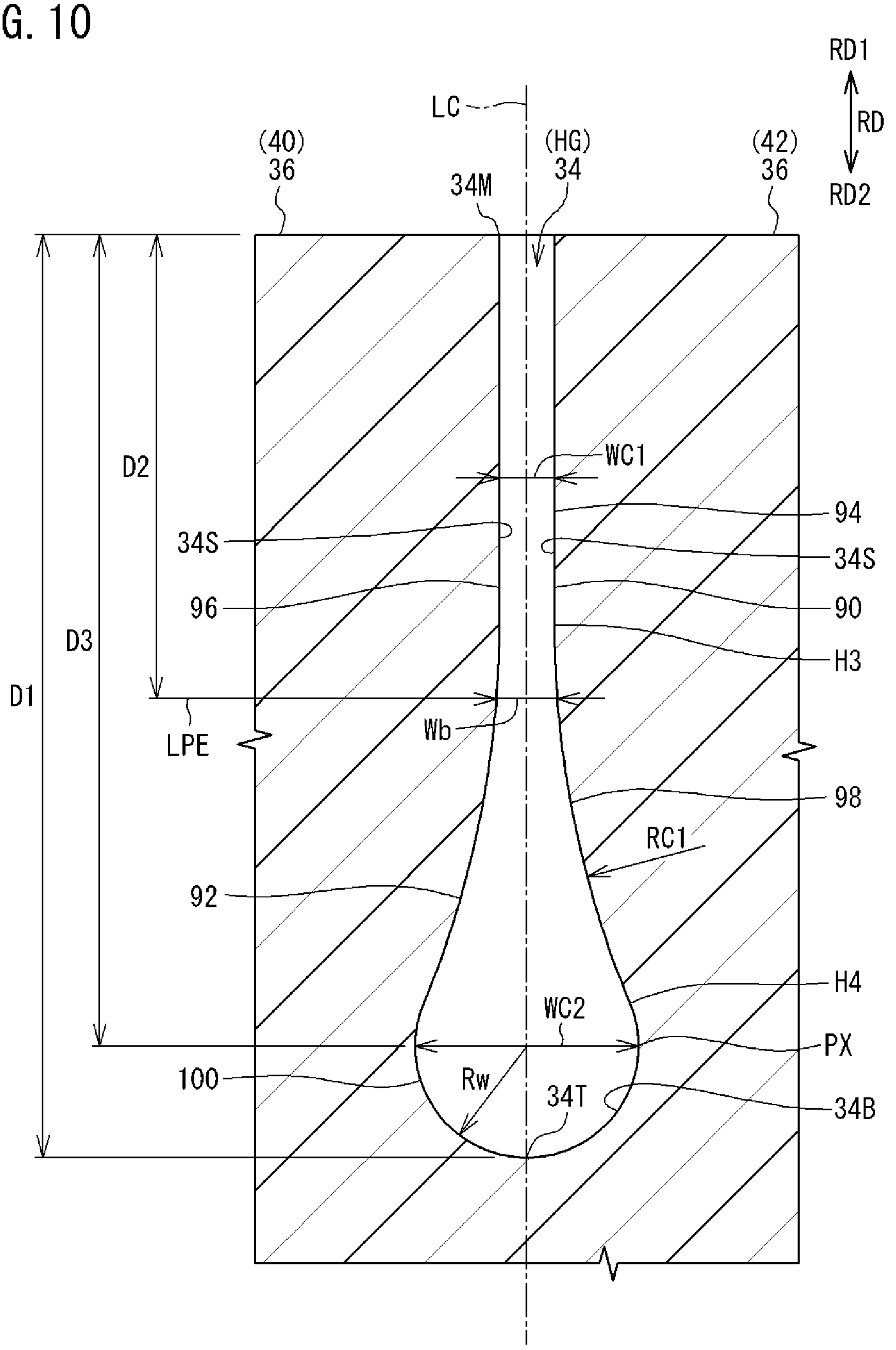
LC
(40)
36
(HG)
34
(42)
36
34M
RD1
RD
RD2
WC1
D2
94
34S
34S
96
90
D3
H3
D1
LPE
Wb
98
RC1
92
H4
WC2
PX
100
Rw
34T
34B

FIG. 11

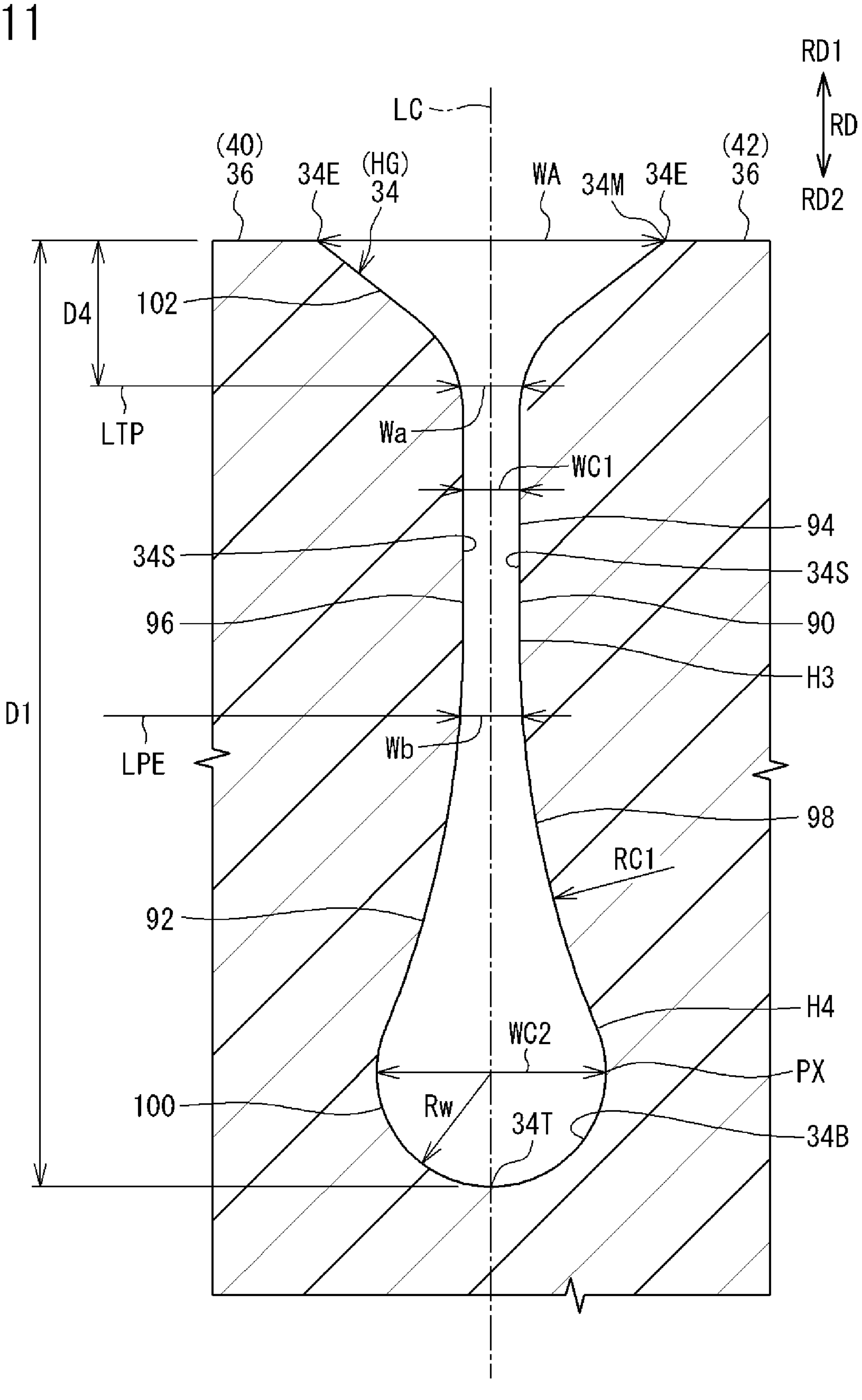
RD1
RD
RD2
LC
(40)
36
34E
(HG)
34
WA
34M
34E
(42)
36
D4
102
LTP
Wa
WC1
94
34S
34S
96
90
H3
D1
LPE
Wb
98
RC1
92
H4
WC2
PX
100
Rw
34T
34B

Europäisches Patentamt
European Patent Office
Office européen des brevets

# EUROPEAN SEARCH REPORT

Application Number
EP 25 19 5188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/141597 A1 (KITANI NAOFUMI [JP]) 11 May 2023 (2023-05-11) * paragraphs [0004], [0072]; claims; figures * ----- | 1-15 | INV. B60C1/00 B60C9/22 B60C9/20 B60C19/00 B60C11/00 B60C11/03 C08L7/00 C08K3/00 G06K19/077 C08K3/36 B60C3/04 |
| A | US 2015/114536 A1 (HAMANAKA HIDEKI [JP] ET AL) 30 April 2015 (2015-04-30) * paragraphs [0030], [0070], [0073], [0145]; claims; figures * ----- | 1-15 | |
| A | CN 114 179 568 A (FRIEND MAKING RUBBER IND JOINT STOCK AGENCY) 15 March 2022 (2022-03-15) * paragraphs [0060], [0066] - [0070], [0084], [0097]; claims; figures * ----- | 1-15 | |
| A | JP 2023 031213 A (SUMITOMO RUBBER IND) 8 March 2023 (2023-03-08) * paragraphs [0075], [0076], [0108]; claims; figures * ----- | 1-15 | TECHNICAL FIELDS SEARCHED (IPC) |
| A | EP 4 389 465 A1 (SUMITOMO RUBBER IND [JP]) 26 June 2024 (2024-06-26) * claims; figures * ----- | 1-15 | B60C |

The present search report has been drawn up for all claims

2

| Place of search | Date of completion of the search | Examiner |
|---|---|---|
| Munich | 13 January 2026 | Thanbichler, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 19 5188

This annex lists the patent family members relating to the patent documents cited in the above-mentioned European search report. The members are as contained in the European Patent Office EDP file on
The European Patent Office is in no way liable for these particulars which are merely given for the purpose of information.

13-01-2026

| Patent document cited in search report | Publication date | Patent family member(s) | Publication date |
|---|---|---|---|
| US 2023141597 A1 | 11-05-2023 | CN 116100994 A | 12-05-2023 |
| | | EP 4180243 A1 | 17-05-2023 |
| | | JP 7131683 B1 | 06-09-2022 |
| | | JP 2023070889 A | 22-05-2023 |
| | | US 2023141597 A1 | 11-05-2023 |
| US 2015114536 A1 | 30-04-2015 | CN 104334369 A | 04-02-2015 |
| | | CN 104349912 A | 11-02-2015 |
| | | CN 104349913 A | 11-02-2015 |
| | | CN 104379367 A | 25-02-2015 |
| | | CN 104379368 A | 25-02-2015 |
| | | CN 104395104 A | 04-03-2015 |
| | | DE 112013002467 T5 | 05-02-2015 |
| | | DE 112013002470 T5 | 05-02-2015 |
| | | DE 112013002477 T5 | 29-01-2015 |
| | | DE 112013002546 T5 | 19-02-2015 |
| | | DE 112013002550 T5 | 19-02-2015 |
| | | DE 112013002605 T5 | 19-02-2015 |
| | | JP 6299216 B2 | 28-03-2018 |
| | | JP 6299217 B2 | 28-03-2018 |
| | | JP 6299218 B2 | 28-03-2018 |
| | | JP 6299219 B2 | 28-03-2018 |
| | | JP 6299220 B2 | 28-03-2018 |
| | | JP 6299221 B2 | 28-03-2018 |
| | | JP WO2014010348 A1 | 20-06-2016 |
| | | JP WO2014010349 A1 | 20-06-2016 |
| | | JP WO2014010350 A1 | 20-06-2016 |
| | | JP WO2014010351 A1 | 20-06-2016 |
| | | JP WO2014010352 A1 | 20-06-2016 |
| | | JP WO2014010353 A1 | 20-06-2016 |
| | | KR 20150036359 A | 07-04-2015 |
| | | KR 20150036396 A | 07-04-2015 |
| | | KR 20150036400 A | 07-04-2015 |
| | | KR 20150036429 A | 07-04-2015 |
| | | KR 20150037995 A | 08-04-2015 |
| | | KR 20150038006 A | 08-04-2015 |
| | | US 2015114536 A1 | 30-04-2015 |
| | | US 2015136296 A1 | 21-05-2015 |
| | | US 2015136297 A1 | 21-05-2015 |
| | | US 2015151581 A1 | 04-06-2015 |
| | | US 2015151582 A1 | 04-06-2015 |
| | | US 2015165823 A1 | 18-06-2015 |
| | | WO 2014010348 A1 | 16-01-2014 |
| | | WO 2014010349 A1 | 16-01-2014 |
| | | WO 2014010350 A1 | 16-01-2014 |
| | | WO 2014010351 A1 | 16-01-2014 |

EPO FORM P0459

For more details about this annex : see Official Journal of the European Patent Office, No. 12/82

# ANNEX TO THE EUROPEAN SEARCH REPORT ON EUROPEAN PATENT APPLICATION NO. EP 25 19 5188

This annex lists the patent family members relating to the patent documents cited in the above-mentioned European search report. The members are as contained in the European Patent Office EDP file on
The European Patent Office is in no way liable for these particulars which are merely given for the purpose of information.

13-01-2026

| Patent document cited in search report | Publication date | Patent family member(s) | Publication date |
| --- | --- | --- | --- |
| | | WO 2014010352 A1 | 16-01-2014 |
| | | WO 2014010353 A1 | 16-01-2014 |
| CN 114179568 A | 15-03-2022 | CN 114179568 A | 15-03-2022 |
| | | EP 3967517 A1 | 16-03-2022 |
| | | EP 4094958 A1 | 30-11-2022 |
| | | JP 7131589 B2 | 06-09-2022 |
| | | JP 2022047999 A | 25-03-2022 |
| | | US 2022080776 A1 | 17-03-2022 |
| JP 2023031213 A | 08-03-2023 | JP 7107457 B1 | 27-07-2022 |
| | | JP 2023031213 A | 08-03-2023 |
| EP 4389465 A1 | 26-06-2024 | EP 4389465 A1 | 26-06-2024 |
| | | JP 7380821 B1 | 15-11-2023 |
| | | JP 2024090032 A | 04-07-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2024146331 A
- JP 2023006887 A
- EP 3427975 A
- JP 6856781 B
- EP 3173251 A
- JP 2009002594 A


### Non-patent literature cited in the description


- *Rubber Chemistry and Technology*, 2012, vol. 85 (3), 408-449
- A Comparison of Surface Morphology And Chemistry of Pyrolytic Carbon Blacks with Commercial Carbon Blacks. *Powder Technology*, 2005, vol. 160, 190-193
- *Akita Prefectural University Web Journal B*, 2019, vol. 6, 216-222